Europäisches Patentamt

European Patent Office

Office européen des brevets

(19)

(11) Veröffentlichungsnummer **0 015 281
B1**

# (12) EUROPÄISCHE PATENTSCHRIFT

(45) Veröffentlichungstag der Patentschrift:
19.09.84

(21) Anmeldenummer: 79900794.3

(22) Anmeldetag: 21.06.79

(86) Internationale Anmeldenummer:
PCT/EP 79/00048

(87) Internationale Veröffentlichungsnummer:
WO 80/00277 (21.02.80 Gazette 80/4)

(51) Int. Cl.³ **G 05 D 13/62,** G 05 B 19/04,
B 60 K 31/00

(54) **VERFAHREN UND VORRICHTUNG ZUR DIGITALEN REGELUNG DER FAHRGESCHWINDIGKEIT EINES KRAFTFAHRZEUGS.**

(30) Priorität: 15.07.78 DE 2831238
27.09.78 DE 2842023

(43) Veröffentlichungstag der Anmeldung:
17.09.80 Patentblatt 80/19

(45) Bekanntmachung des Hinweises auf die Patenterteilung:
19.09.84 Patentblatt 84/38

(84) Benannte Vertragsstaaten:
DE FR GB SE

(56) Entgegenhaltungen:
DE - A - 2 100 747
DE - A - 2 110 875
DE - A - 2 707 462
FR - A - 2 321 397
FR - A - 2 328 247
US - A - 3 869 019

(73) Patentinhaber: ROBERT BOSCH GMBH, Postfach 50,
D-7000 Stuttgart 1 (DE)

(72) Erfinder: SCHNEIDER, Erich, Entengasse 14,
D-7125 Kirchheim (DE)
Erfinder: FLEISCHER, Helmut, Augasse 20,
D-6361 Niddatal-Ilbenstadt (DE)
Erfinder: NONNENMANN, Wolfgang, Hauffstrasse 10,
D-7530 Pforzheim (DE)
Erfinder: GERUM, Benno, Senefelderstrasse 69c,
D-7000 Stuttgart 1 (DE)

(74) Vertreter: Friedmann, Jürgen, Dr.-Ing., c/o Robert Bosch
GmbH Robert-Bosch-Platz 1,
D-7016 Gerlingen-Schillerhöhe (DE)

## Beschreibung

Die Erfindung geht aus von einem Verfahren bzw. einer Vorrichtung nach der Gattung der Ansprüche 1 und 5. Es ist schon eine solche Regeleinrichtung aus der DE-OS 2 546 529 bekannt, bei der jedoch bei Fahrgeschwindigkeitsänderungen plötzlich der neue Sollwert vorgegeben wird. Da die Fahrgeschwindigkeit relativ träge reagiert, besteht die Gefahr von Regelschwingungen, die zumindest einige Perioden nach Erreichen des neuen Sollwerts andauern. Um ein solches Überschwingen zu verringern, ist es aus der DE-OS 2 537 415 bekannt, einen Regler mit PD-Verhalten einzusetzen. Bei einem solchen PD- bzw. P-Regler wird durch unterschiedliche Belastungen und variables Spiel in der Stellgliedanlenkung die geregelte Geschwindigkeit nach dem Setzvorgang ungenau. Wird dagegen ein I-Regler verwendet, so erzielt man einen schlechteren Komfort. Die DE-OS 2 707 462 zeigt und beschreibt einen Fahrgeschwindigkeitsregler, mit dem mittels einer Geschwindigkeitseinstelltaste die Fahrzeuggeschwindigkeit inkremental erhöht werden kann. Mit jeder Betätigung einer Taste wird die Sollgeschwindigkeit schrittweise geändert. Durch eine vielfache manuelle Betätigung ist ein rampenähnlicher Anstieg der Geschwindigkeit zu erzielen. Das System hat den Nachteil, daß es bei einem Drücken der Wiederaufnahmetaste oder bei einem sehr schnellen, wiederholten Drücken der Beschleunigungstaste nicht sicher arbeitet. In diesem Falle wird die Drosselklappe weit geöffnet, damit eine hohe Beschleunigung erzielt wird. Dies führt aufgrund der großen Trägheit des Fahrzeuges beim Erreichen der Sollgeschwindigkeit zu einem instabilen Verhalten, da die Sollgeschwindigkeit nur in Form einer gedämpften Schwingung zu erreichen ist. Es ist daher Aufgabe der Erfindung, ein Verfahren und eine Vorrichtung zur Regelung der Geschwindigkeit eines Fahrzeuges zu schaffen, mittels denen ein vorgegebener Geschwindigkeitssollwert möglichst schnell und ohne Einschwingvorgänge erreicht wird.

Das erfindungsgemäße Verfahren und die erfindungsgemäße Einrichtung mit den kennzeichnenden Merkmalen der Ansprüche 1 und 5 hat demgegenüber den Vorteil, daß durch die Überführung des Istwertes auf einen davon verschiedenen Sollwert mittels einer vorgegebenen Rampe und der Veränderung der Steigung der Rampe in der Nähe des Sollwertes der Feder nach jedem Setzvorgang 0 wird sowie ein weicher Übergang ohne Einschwingvorgänge erzielt werden kann, wodurch ein guter Fahrkomfort erreichbar ist. Die steilere Rampe ermöglicht eine schnelle Heranführung der Istgeschwindigkeit an die Sollgeschwindigkeit, durch die langsame Rampe wird der Rampenwert so lange verschoben, bis der Istwert gleich dem Sollwert ist. Danach wird der Rampenwert als Sollwert fixiert. Dadurch werden alle, den Setzvorgang beeinflussenden Dinge eliminiert.

Durch die in den abhängigen Ansprüchen aufgeführten Maßnahmen sind vorteilhafte Weiterbildungen und Verbesserungen der Erfindung möglich. Eine besonders vorteilhafte Methode zum Erreichen der Sollgeschwindigkeit ist dadurch gegeben, daß die Rampensteigung in Abhängigkeit von der Differenz zwischen Sollgeschwindigkeit und Istgeschwindigkeit veränderbar ist. Dadurch wird ein noch weicherer Übergang auf die neue Fahrgeschwindigkeit erzielt.

## Zeichnung

Zwei Ausführungsbeispiele der Erfindung sind in der Zeichnung dargestellt und in der nachfolgenden Beschreibung näher erläutert. Es zeigt

Fig. 1 eine schaltungsmäßige Ausgestaltung des ersten Ausführungsbeispiels mit einem Stellregelkreis,

Fig. 2 ein Diagramm zur Erläuterung eines über die Regeleinrichtung bewirkten Beschleunigungsvorgangs,

Fig. 3 ein Diagramm zur Erläuterung des Vorgangs der Überführung der Fahrgeschwindigkeit auf einen zuvor gespeicherten Sollwert,

Fig. 4 eine schaltungsmäßige Ausgestaltung des zweiten Ausführungsbeispiels ohne Stellregelkreis,

Fig. 5 ein Diagramm gemäß Fig. 3 für das zweite Ausführungsbeispiel,

Fig. 6 ein den gleichen Vorgang darstellendes Diagramm für den Fall einer Straßensteigung,

Fig. 7 eine schaltungsmäßige Ausführung einer als Impulssteuerung ausgebildeten Stellvorrichtung,

Fig. 8 ein Diagramm zur Erläuterung der Wirkungsweise der in Fig. 7 dargestellten Impulssteuerung und

Fig. 9 eine schaltungsmäßige Ausgestaltung einer Initialisierungsvorrichtung.

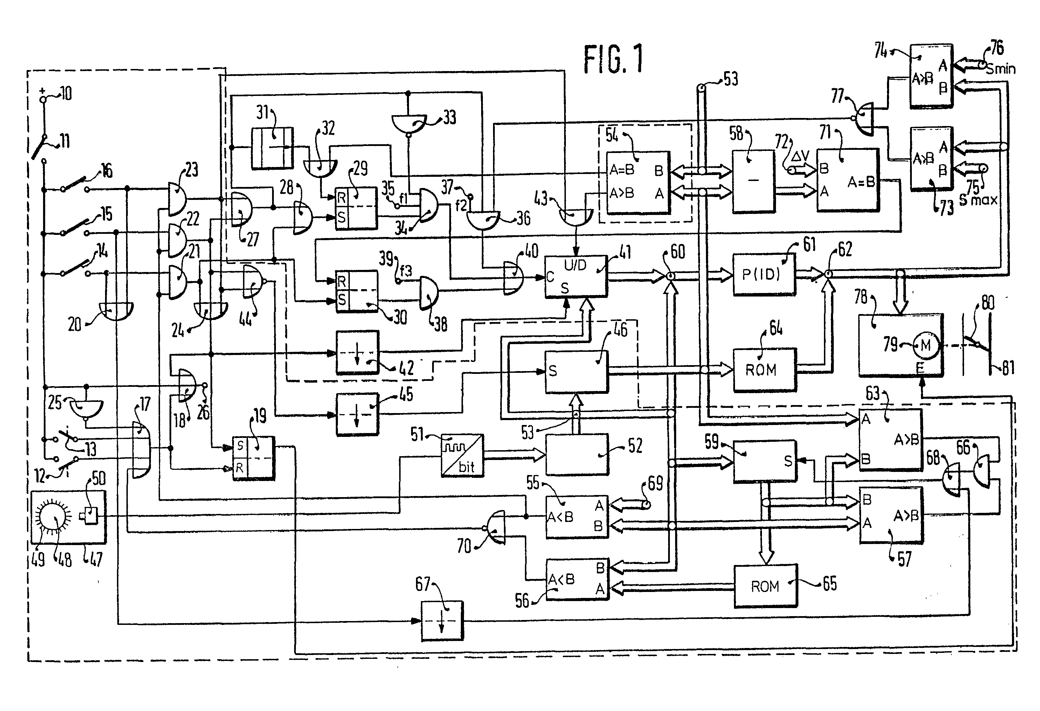

Bei dem in Fig. 1 dargestellten Ausführungsbeispiel ist eine Klemme 10, an der ein positives Potential liegt, über einen Hauptschalter 11 zur Einschaltung der Spannungsversorgung mit fünf vorzugsweise als Tastschalter ausgebildeten Schaltvorrichtungen 12 bis 16 verbunden. Die Schalter 12 und 13 sind als Brems- bzw. Kupplungsschalter ausgebildet und werden geschlossen, wenn die mechanisch damit verbundene Bremse bzw. Kupplung des Kraftfahrzeuges betätigt wird. Beide Schalter 12, 13 sind an je einem Eingang eines ODER-Gatters 17 angeschlossen, dessen Ausgang sowohl mit einem Eingang eines weiteren ODER-Gatter 18 wie auch mit dem Rücksetzeingang R eines Flipflops 19 verbunden ist. Die Schalter 14 bis 16 sind die Befehlsschaltung für die Regeleinrichtung. Der erste Schalter 14 ist als

0 015 281

Wiederaufnahmeschalter geschaltet, d. h. bei seiner Betätigung wird eine zuvor gespeicherte Soll-Fahrgeschwindigkeit wieder aufgenommen. Der zweite Schalter 15 ist als Verzögerungsschalter und der dritte Schalter 16 als Beschleunigungsschalter geschaltet, d. h., während einer Betätigung eines dieser Schalter erfolgt ein Verzögerungs- bzw. Beschleunigungsvorgang. Zusätzlich dienen diese Schalter 15, 16 bei kurzzeitiger Betätigung der Speicherung und Beibehaltung der augenblicklich vorliegenden Fahrgeschwindigkeit.

Die Schalter 14 bis 16 sind sowohl an je einem Eingang eines ODER-Gatters 20 wie auch an drei UND-Gatter 21 bis 23 angeschlossen, wo bei jedem Schalter 14 bis 16 ein UND-Gatter 21 bis 23 zugeordnet ist. Die Ausgänge der drei UND-Gatter 21 bis 23 sind über ein ODER-Gatter 24 sowohl an den Setzeingang S des Flipflops 19, wie auch an einen weiteren Eingang des ODER-Gatters 18 angeschlossen. Der Hauptschalter 11 ist sowohl über einen Inverter 25 mit einem weiteren Eingang des ODER-Gatters 17, wie auch direkt mit einem weiteren Eingang des ODER-Gatters 18 verbunden, dessen Ausgang an eine Klemme 26 angeschlossen ist. Diese Klemme 26 ist in nicht näher dargestellter Weise mit den Rücksetzeingängen sämtlicher Speichervorrichtungen (z. B. Flipflops und Zähler) mit Ausnahme des Ist- und Sollwertspeichers verbunden, die später noch näher beschrieben werden.

Die Ausgänge der UND-Gatter 22, 23 sind weiterhin über ein ODER-Gatter 27 an einen Eingang eines ODER-Gatters 28 angeschlossen, dessen Ausgang an den Setzeingang S eines Flipflops 29 und dessen zweiter Eingang an den Ausgang des UND-Gatters 21 sowie an den Setzeingang eines weiteren Flipflops 30 angeschlossen ist. Der Ausgang des ODER-Gatters 27 ist über ein auf die Rückflanke eines Signals wirkendes Verzögerungsglied 31 sowie über ein dazu in Reihe geschaltetes ODER-Gatter 32 an den Rücksetzeingang R des Flipflops 29 angeschlossen. Weiterhin ist der Ausgang des ODER-Gatters 27 über einen Inverter 33 an einen Eingang eines UND-Gatters 34 angeschlossen, dessen zweiter Eingang mit dem Ausgang des Flipflops 29 und dessen dritter Eingang mit einer Klemme 35 verbunden ist, an die eine Taktfrequenz f1 angelegt ist. Schließlich ist der Ausgang des ODER-Gatters 27 noch an einen Eingang eines UND-Gatters 36 angeschlossen, dessen zweiter Eingang mit einer eine zweite Taktfrequenz f2 führenden Klemme 37 verbunden ist. Der Ausgang des Flipflops 30 ist an einen Eingang eines UND-Gatters 38 angeschlossen, dessen zweiter Eingang mit einer eine dritte Taktfrequenz f3 führenden Klemme 39 verbunden ist.

Die Ausgänge der UND-Gatter 34, 36, 38 sind über ein ODER-Gatter 40 mit dem Takteingang C eines als Hilfs-Sollwert-Speichereinrichtung verwendeten digitalen Zählers 41 verbunden. Der Ausgang des ODER-Gatters 24 ist über ein z. B. als monostabile Schaltstufe ausgebildetes Zeitglied 42 zur Erzeugung eines kurzen Setzimpulses mit dem Setzeingang S des Zählers 41 verbunden. Der Ausgang des UND-Gatters 23 ist über ein ODER-Gatter 43 an den Zählrichtungseingang U/D (up/down) des Zählers 41 angeschlossen.

Die Ausgänge der UND-Gatter 22, 23 sind weiterhin über ein NOR-Gatter 44 an den Triggereingang eines weiteren Zeitglieds 45 angeschlossen, das zur Erzeugung eines kurzen Setzsignals für eine mit dem Ausgang des Zeitglieds 45 verbundenen digitalen Zählers 46 dient. Dieser Zähler 46 ist als Sollwert-Speicher geschaltet.

Ein Drehzahlgeber 47 dient zur Erzeugung einer drehzahlproportionalen Frequenz und besteht aus einer, mit einem Fahrzeugrad gekuppelten drehbaren Scheibe 48, die umfangsseitig eine Vielzahl von ferromagnetischen Marken 49 aufweist. Diese ferromagnetischen Marken werden an einem induktiven Aufnehmer 50 vorbeigeführt und induzieren dort jeweils einen Impuls. Die Ausgangsfrequenz des Drehzahlgebers 47 wird in einem Frequenz-Zahlenwandler 51 in ein Datenwort, insbesondere eine binäre Zahl umgewandelt und als solche einem digitalen Zähler 52 zugeführt, der als Istwert-Speichervorrichtung geschaltet ist und laufend die anliegenden Istwerte einspeichert. Ein Frequenz-Zahlenwandler ist z. B. aus der US-PS 3 928 797 bekannt, jedoch sind — wie auch für den Drehzahlgeber — verschiedene bekannte Prinzipien und Ausführungsformen einsetzbar.

Die Zahlenausgänge des Istwert-Speichers 52 sind über eine Klemmenanordnung 53 mit Zahleneingängen folgender Bauelemente verbunden: Dem Hilfs-Sollwert-Speicher 41, dem Sollwert-Speicher 46, den Eingängen B eines ersten digitalen Komparators 54, den Eingängen B eines zweiten digitalen Komparators 55, den Eingängen B eines dritten digitalen Komparators 56, den Eingängen A eines vierten digitalen Komparators 57, einer Subtrahierstufe 58 (vorzugsweise als Addierstufe realisiert), einem digitalen Zähler 59 sowie einer Regelungs-Vergleichsstelle 60 (gewöhnlich als Addierstufe realisiert). Die Zahlenausgänge der Hilfs-Sollwert-Speichereinrichtung 41 sind ebenfalls an die Regelungs-Vergleichsstelle 60 angeschlossen, deren Ausgänge über eine Regelstufe 61 an eine weitere Regelungs-Vergleichsstelle 62 angeschlossen sind. Diese Regelstufe 61 kann in Abhängigkeit der gewünschten Regeleigenschaften P-, I-, D-Verhalten oder kombiniertes Verhalten aufweisen. Im eingangs angegebenen Stand der Technik ist für eine Regeleinrichtung für die Fahrgeschwindigkeit eines Kraftfahrzeugs ein PD-Regler eingesetzt und beschrieben.

Die Zahlenausgänge der Sollwert-Speichereinrichtung 46 sind mit den Zahleneingängen folgender Bauelemente verbunden: Den Eingängen A des ersten digitalen Komparators 54, der Subtrahierstufe 58, den Eingängen A eines fünften digitalen Komparators 63, eines Festwertspeichers (ROM) 64, dessen Ausgänge an die Regelungs-Vergleichsstelle 62 angeschlossen sind. Die Zahlenausgänge des Zählers 59 sind an die Eingänge B sowohl des vierten digitalen Komparators 57, wie auch des fünften digitalen Komparators 63 und weiterhin über einen Festwertspeicher (ROM) 65 an die Eingänge A des

3

dritten digitalen Komparators 56 angeschlossen. Die Ausgänge der Komparatoren 57, 63, an denen ein Signal erzeugt wird, wenn die an den Eingängen A anliegende Zahl größer ist als die an den Eingängen B anliegende Zahl, sind über ein UND-Gatter 66 und ein in Reihe dazu geschaltetes ODER-Gatter 68 mit dem Setzeingang S des Zählers 59 verbunden. Der Ausgang des ODER-Gatters 20 ist über ein Zeitglied 67 ebenfalls mit einem Eingang des ODER-Gatters 68 des Zählers 59 verbunden.

An die Zahleneingänge A des zweiten digitalen Komparators 55 ist über eine Klemmenanordnung 69, vorzugsweise durch feste Verdrahtung, ein Zahlenwert angelegt, der die Schwelle für eine minimale Fahrgeschwindigkeit Vmin vorgibt, unterhalb derer eine Abschaltung der Regeleinrichtung erfolgt. Die Ausgänge der digitalen Komparatoren 55, 56, an denen ein Ausgangssignal erzeugt wird, wenn der an den Eingängen A anliegende Zahlenwert kleiner ist als der an den Eingängen B anliegende Zahlenwert, sind über ein NOR-Gatter 70 an einen weiteren Eingang des ODER-Gatters 17 angeschlossen. Weiterhin ist dieser Ausgang des zweiten digitalen Komparators 55 mit je einem weiteren Eingang der UND-Gatter 21 bis 23 verbunden.

Ein Ausgang des ersten digitalen Komparators 54, an dem ein Ausgangssignal erzeugt wird, wenn der an den Eingängen A anliegende Zahlenwert größer ist als der an den Eingängen B anliegende Zahlenwert, ist mit einem weiteren Eingang des ODER-Gatters 43 verbunden. Ein zweiter Ausgang dieses Komparators 54, an dem ein Ausgangssignal erzeugt wird, wenn die Eingangszahlenwerte gleich groß sind, ist an einen weiteren Eingang des ODER-Gatters 32 angeschlossen. Die Zahlenausgänge der Subtrahierstufe 58 sind an Zahleneingänge A eines sechsten digitalen Komparators 71 angeschlossen. Über eine Klemmenanordnung 72 ist vorzugsweise durch feste Verdrahtung an die Zahleneingänge B des Komparators 71 ein Zahlenwert angelegt, der proportional einer Geschwindigkeitsdifferenz ist, die den Knickpunkt der Rampensteigung beim Wiederaufnahmevorgang vorgibt. Der Ausgang des sechsten digitalen Komparators 71, an dem ein Ausgangssignal erzeugt wird, wenn die eingangs anliegenden Zahlenwerte gleich groß sind, ist an den Rücksetzeingang R des Flipflops 30 angeschlossen.

Die Zahlenausgänge der zweiten Regelungs-Vergleichsstelle 62 sind mit Zahleneingängen A eines siebten digitalen Komparators 73 sowie mit Zahleneingängen B eines achten digitalen Komparators 74 verbunden. Über eine Klemme 75 ist vorzugsweise durch feste Verdrahtung an die Zahleneingänge B des Komparators 73 ein Zahlenwert angelegt, der einer maximalen Stellgröße Smax entspricht, die nicht überschritten werden soll. Über eine Klemme 76 ist vorzugsweise durch feste Verdrahtung den Zahleneingängen A des Komparators 74 ein Zahlenwert zugeführt, der einer minimalen Stellgröße Smin entspricht, die nicht unterschritten werden soll. Die Ausgänge der Komparatoren 73, 74, an denen ein Ausgangssignal erzeugt wird, wenn der an den Zahleneingängen A anliegende Zahlenwert größer ist als der an den Zahleneingängen B anliegende Zahlenwert, sind über ein NOR-Gatter 77 an einen weiteren Eingang des UND-Gatters 36 angeschlossen.

Weiterhin sind die Zahlenausgänge der zweiten Regelungs-Vergleichsstelle 62 einem Stellregelkreis 78 zugeführt, das einen Stellantrieb 79 aufweist, der z. B. als Stellmotor oder Stellmagnet ausgebildet sein kann. Durch diesen Stellantrieb 79 ist ein die Geschwindigkeit des Kraftfahrzeugs beeinflussendes Element 80 bewegbar, das in Fig. 1 als Drosselklappe in einem Saugrohr 81 der Brennkraftmaschine ausgebildet ist. Andere, die Geschwindigkeit eines Kraftfahrzeugs beeinflussende Elemente sind z. B. der Zündzeitpunkt, bzw. die Zündung überhaupt, oder bei einem Einspritzmotor die Stellung der Regelstange der Einspritzpumpe oder der Schaltzeitpunkt der Einspritzventile. Stellregelkreise mit Stellantrieben sind aus dem eingangs angegebenen Stand der Technik bekannt und auch in digitaler Form durch die DE-OS 2 746 545 vorgeschlagen worden. Ein Sperreingang E für den Stellregelkreis, bzw. den Stellantrieb, ist mit dem Ausgang des Flipflops 19 verbunden.

Die drei verwendeten und an die Klemmen 35, 37, 39 angelegten Taktfrequenzen f1 bis f3 können vorzugsweise durch einen nicht näher dargestellten Taktfrequenzgenerator erzeugt werden, wobei unterschiedliche Frequenzen durch Frequenzteilung erzeugt werden. Die vier verwendeten Taktfrequenzen brauchen nicht in jedem Fall verschieden zu sein mit Ausnahme der beiden Frequenzen zur Erzeugung der unterschiedlichen Rampensteigungen.

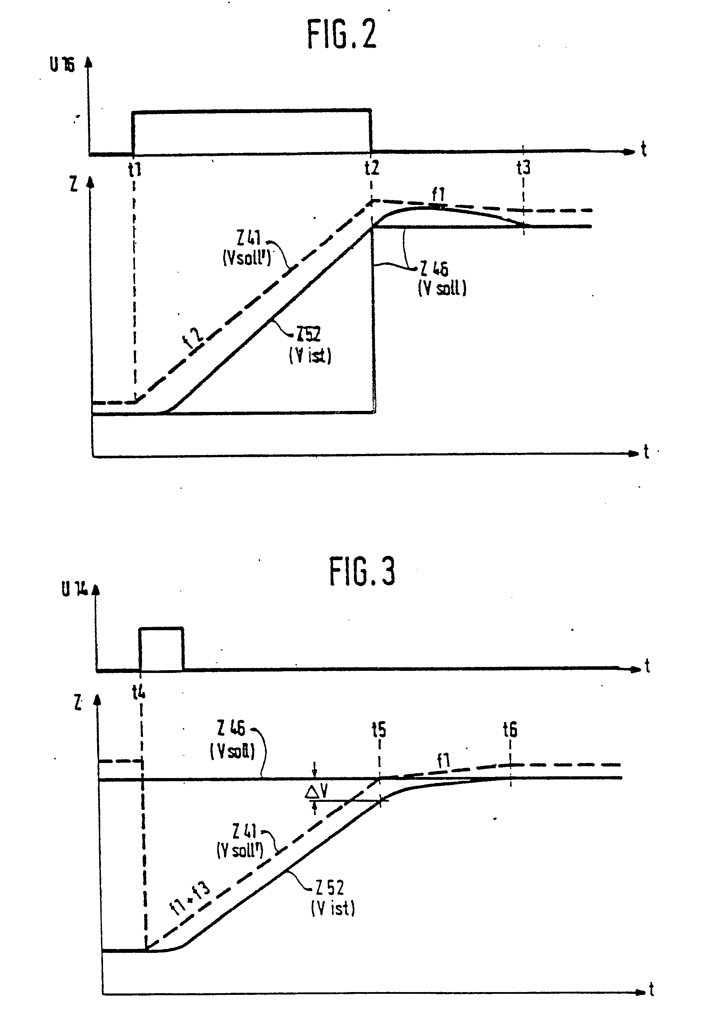

Die Wirkungsweise des in Fig. 1 dargestellten Ausführungsbeispiels soll im folgenden anhand der in den Fig. 2 und 3 dargestellten Diagramme erläutert werden. Zunächst sei davon ausgegangen, daß sich das Fahrzeug mit einer bestimmten Geschwindigkeit bewegt und der Hauptschalter 11 geschlossen ist. Das Fahrzeug soll nun mittels der Regeleinrichtung beschleunigt werden. Dazu wird der Beschleunigungsschalter 16 betätigt, wodurch das Flipflop 29 gesetzt wird. Gleichzeitig wird über das ODER-Gatter 24 das Flipflop 19 gesetzt, wodurch die Sperrung des Stellregelkreises 78 bzw. des Stellantriebs 79 aufgehoben wird. Gleichzeitig erfolgt über das ODER-Gatter 18 und die Klemme 26 — wie bereits beschrieben — eine Initialisierung der Speichereinrichtung. Durch den kurzen Impuls des Zeitglieds 42 wird der Zähler 41 mit dem Speicherinhalt des Istwert-Speichers 52 geladen. Während (ab dem Zeitpunkt t1) durch Betätigung des Schalters 16 das Signal U16 vorliegt ist das UND-Gatter 34 durch das 0-Signal am Ausgang des Inverters 33 gesperrt. Das UND-Gatter 36 ist durch dieses Signal U16 jedoch geöffnet, und die Taktfrequenz f2 kann zum Takteingang C des Zählers 41 gelangen und zählt ab dem, dem Istwert entsprechenden Zahlenwert aufwärts, da durch das Signal U16 am Ausgang des ODER-Gatters 43 ein 1-Signal anliegt, das den Aufwärts-Zählvorgang bewirkt. An der Regelungs-Vergleichsstelle 60 wirkt sich dieses Aufwärtszählen als Veränderung des Soll-Werts aus, was sich

4

wiederum an der Regelungs-Vergleichsstelle 62 als scheinbare Verkleinerung des Istwerts bemerkbar macht. Die sich daraus ergebende Stellgröße bewirkt über den Stellregelkreis 78 und die Brennkraftmaschine eine Vergrößerung der Leistung und somit des tatsächlichen Istwerts, also eine Vergrößerung des Zahlenwerts im Istwert-Speicher 52. Diese Vergrößerung dauert so lange an, bis der Schalter 16 wieder geöffnet wird bzw. der als Taste ausgebildete Schalter 16 zum Zeitpunkt t2 losgelassen wird. Das UND-Gatter 36 sperrt die Taktfrequenz f2, und die kleinere Taktfrequenz f1 kann nunmehr über das UND-Gatter 34 an den Takteingang C des Zählers 41 gelangen, gleichzeitig erfolgt durch das Signal am Ausgang des UND-Gatters 23 über das ODER-Gatter 43 eine Umkehr der Zählrichtung, die durch das Ausgangssignal des Vergleichers 54 festgelegt wird. Schließlich wird zum Zeitpunkt t2 durch die Rückflanke des Signals U16 über das NOR-Gatter 44 das Zeitglied 45 getriggert, dessen kurzer Ausgangsimpuls ein Setzen des Sollwert-Speichers 46 mit dem augenblicklich vorliegenden Istwert bewirkt. An der Regelungs-Vergleichsstelle 62 liegt nun ein Sollwert vor, der mit Hilfe des gespeicherten Werts im Sollwert-Speicher 46 aufgrund der Arbeitskennlinie der Regeleinrichtung durch den Festwertspeicher 64 gebildet wird. Dabei bilden die im Sollwert-Speicher 46 niedergelegten Zahlenwerte die Adressen für den Festwertspeicher 64. Infolge der nicht vermeidbaren Trägheit eines Regelsystems überschreitet der Istwert nach dem Zeitpunkt t2 um einen kleinen Betrag den Sollwert. Die Rückführung wird durch die abfallende Rampe infolge der Taktfrequenz f1 unterstützt. Ist der gespeicherte Sollwert zum Zeitpunkt t3 gleich dem gespeicherten Istwert, so wird am Ausgang »A = B« des Komparators 54 ein Rücksetzsignal für das Flipflop 29 erzeugt, durch das der Zählvorgang im Zähler 41 beendet wird.

Wenn sich das Fahrzeug mit der eingestellten Fahrgeschwindigkeit bewegt und nun z. B. infolge einer Gefahrensituation die Bremse oder die Kupplung des Fahrzeugs betätigt wird, so wird dadurch einer der beiden Schalter 12, 13 betätigt, was sowohl über die Klemme 26 zu eine Initialisierung der Speichervorrichtungen, wie auch zu einem Rücksetzen des Flipflops 19 führt. Durch dieses wird der Stellregelkreis 78 bzw. der Stellantrieb 79 auf die Leerlaufstellung rückgeführt, und das Fahrzeug wird nicht mehr durch die Regeleinrichtung beeinflußt. Wird nun der Wiederaufnahmeschalter 14 betätigt, werden die drei Flipflops 19, 29, 30 gesetzt, wodurch einmal die Sperrung des Stellantriebs 79 aufgehoben wird und gleichzeitig die Taktfrequenzen f1 und f3 dem Takteingang C des Zählers 41 zugeführt werden. Diese Vorgänge sind in Fig. 3 dargestellt und beginnen zum Zeitpunkt t4. Der Zähler 41 wird auf den zu diesem Zeitpunkt vorliegenden Wert des Istwert-Speichers 52 gesetzt. Da der an den Eingängen A des Komparators 54 anliegende Sollwert zu diesem Zeitpunkt größer ist als der an den Eingängen B anliegende Istwert wird am Ausgang »A > B« ein Signal erzeugt, das über das ODER-Gatter 43 ein Aufwärtszählen im Zähler 41 bwirkt. Dieser Aufwärtszählgang dauert so lange, bis der Differenzbetrag von Sollwert und Istwert, der am Ausgang der Subtrahierstufe 58 vorliegt, den Wert $\Delta V$ erreicht hat, der z. B. drei Stundenkilometer betragen kann. Ist diese Gleichheit erreicht, so wird durch den Ausgang des Komparators 71 das Flipflop 30 rückgesetzt, wodurch das UND-Gatter 38 gesperrt wird. Ab diesem Zeitpunkt t5 erfolgt ein Weiterzählen im Zähler 41 nur durch die Frequenz f1, wodurch sich eine flachere Rampensteigung ergibt. Diese flachere Rampensteigung führt den Istwert langsam an den Sollwert heran, wobei der Arbeitspunktabgleich durchgeführt wird. Erreicht der Istwert den Sollwert zum Zeitpunkt 6, so erfolgt wie zuvor beschrieben ein Rücksetzen des Flipflops 29 durch den Ausgang »A = B« des Komparators 54. Der Zählvorgang im Zähler 41 ist beendet.

Die zuvor beschriebenen Vorgänge funktionieren in entsprechender Weise auch in umgekehrter Richtung, d. h. bei Betätigung der Wiederaufnahmetaste 14 bei einer über der Soll-Geschwindigkeit liegenden Ist-Geschwindigkeit verlaufen die Zählvorgänge in umgekehrter Zählrichtung, da die Bedingung »A > B« nicht mehr gegeben ist, und über den Komparator 54 dem Zählrichtungseingang U/D des Zählers 41 ein 0-Signal zugeführt wird. Ebenso verhält es sich bei einer durch die Regeleinrichtung bewirkten Verzögerung durch Betätigung des Verzögerungsschalters 15. Auch hier verläuft in Umkehrung von Fig. 2 der erste Teil der Rampe mit negativer Steigung, während der zweite, flachere Teil der Rampe eine positive Steigung aufweist, da durch das entstehende, geringe Überschwingen des Istwerts unter den Sollwert nach Loslassen der Taste über den Ausgang »A > B« des Komparators 54 ein 1-Zählrichtungssignal für die positive Zählrichtung erzeugt wird.

Das Zeitglied 31 verhindert das Abschalten des Anpassungsvorgangs im Moment des Loslassens der Taste 16 bzw. 15, da in diesem Moment Gleichheit zwischen Sollwert und Istwert besteht. Dadurch würde der Komparator 54 über das ODER-Gatter 32 das Flipflop 29 rücksetzen. Da das Fahrzeug nun beschleunigt, wird die Gleichheit aufgehoben, und der Anpassungsvorgang läuft geregelt.

Wird eine der Tasten 15, 16 kurzzeitig betätigt, so findet zwar gemäß Fig. 2 ein kurzzeitiger Zählvorgang in positiver bzw. negativer Richtung im Zähler 41 statt, dieser wirkt sich jedoch kaum aus, da bei dieser geringfügigen Änderung des Zählerstands sofort eine Nachregelung gemäß Fig. 2 erfolgt. Praktisch wird bei einer solchen kurzzeitigen Betätigung der augenblickliche Istwert der Fahrgeschwindigkeit gespeichert und beibehalten.

Um zu verhindern, daß die Stellgröße durch die Regeleinrichtung auf Werte verändert wird, die durch den Stellregelkreis bzw. den Stellantrieb nicht mehr realisiert werden können, ist durch die Komparatoren 73, 74 eine Begrenzung der Stellgröße vorgesehen worden. Wenn entweder die an dem Komparator 73 angelegte maximale Stellgröße Smax durch die tatsächliche Stellgröße überschritten wird oder die an dem Komparator 75 angelegte minimale Stellgröße Smin unterschritten wird, so erzeugt der entsprechende Komparator 73, 74 ein Ausgangssignal, durch das das UND-Gatter 36 gesperrt wird und einen weiteren Zählvorgang im Beschleunigungsfall und Verzögerungsfall im Zähler 41 beendet.

Um ein versehentliches Einschalten der Regeleinrichtung bei kleinen Geschwindigkeiten, insbesondere beim Rangieren des Kraftfahrzeugs, beim Rückwärtsfahren oder bei Ausfall des Drehzahlgebers zu verhindern, ist durch den Komparator 55 eine minimale Fahrgeschwindigkeit Vmin vorgegeben, unterhalb derer die UND-Gatter 21 bis 23 ständig gesperrt sind. Über das NOR-Gatter 70 und das ODER-Gatter 17 wird ein ständiges Rücksetzsignal für das Flipflop 19 gebildet, durch das der Stellantrieb 79 durch den Sperreingang E gesperrt ist.

Da beim Regeln sämtliche Vorgänge über Rampen gesteuert werden, ist die Abweichung Sollwert minus Istwert gering und kann als Sicherheitsfunktion herangezogen werden. Wenn die Differenz Sollwert minus Istwert einen gewissen Wert überschritten hat, deutet dies auf eine Fehlfunktion hin, z. B. die Unterbrechung der Signalleitung von der Bremse oder der Kupplung, deren Signal zu einem Abschalten führen müßte. In diesem Fall soll der Regler automatisch abgeschaltet werden. An dem Zähler 59 liegt ständig der Istwert an. Überschreitet der Sollwert den augenblicklich im Zähler 59 vorliegenden Istwert, so wird über den Komparator 63 und das UND-Gatter 66 ein ständiges Setzsignal für den Zähler 59 erzeugt, sofern gleichzeitig der im Zähler 59 gespeicherte Wert kleiner als der tatsächliche Istwert ist. Diese zweite Bedingung wird durch den Komparator 57 vorgegeben. Im Zähler 59 ist somit ständig der Spitzenwert des Istwerts gespeichert, solange der Sollwert über dem Istwert bleibt. Wird das Fahrzeug bei dieser Bedingung langsamer, so nimmt der Istwert ab, der im Zähler 59 gespeicherte Wert bleibt jedoch erhalten. Im Festwertspeicher 65 ist nun eine Funktion gespeichert, die die Schwelle angibt, unterhalb der eine Hilfsabschaltung erfolgen soll. Diese Funktion ist z. B.:

$$Za = 0,75 \cdot Ze + Z10$$

(Za = Ausgangszahlenwert, Ze = Eingangszahlenwert, Z10 = Zahlenwert dem eine Geschwindigkeit von 10 Stundenkilometern entspricht). Sinkt also der Istwert auf dreiviertel seines Werts zuzüglich 10 Stundenkilometer ab, so wechselt das 1-Signal am Ausgang des Komparators 56 auf ein 0-Signal, durch das über das NOR-Gatter 70 und das ODER-Gatter 17 das Flipflop 19 rückgesetzt wird und den Stellantrieb abschaltet. Durch die in den Festwertspeicher eingegebene Funktion kann die Abschaltschwelle variabel als Funktion der Geschwindigkeit vorgegeben werden.

Bei Öffnen des Hauptschalters 11 erfolgt über den Inverter 25 und das ODER-Gatter 17 ebenfalls ein Rücksetzbefehl auf Leerlaufstellung für den Stellantrieb 79.

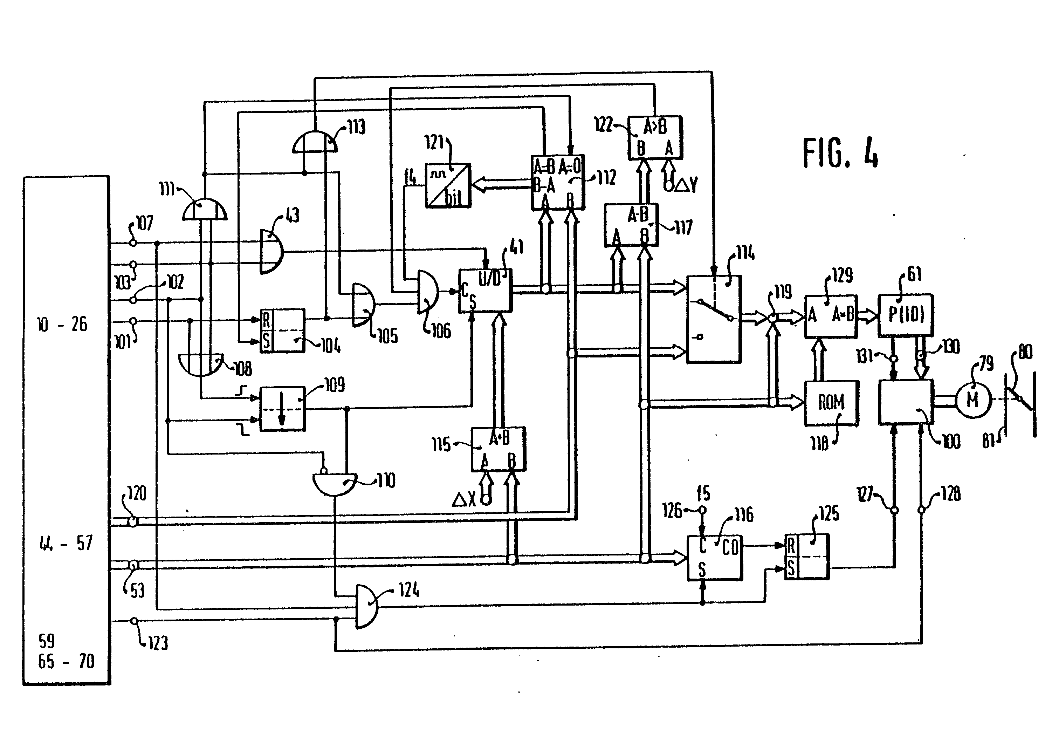

Das in Fig. 4 dargestellte, zweite Ausführungsbeispiel enthält wiederum die in Fig. 1 mit einer unterbrochenen Linie umrahmten Bereiche, die die Bauteile 10 bis 26, 44 bis 57, 59 sowie 65 bis 70 enthalten. Diese Bauteile sind untereinander gleich beschaltet und daher nicht noch einmal detailliert dargestellt. Ein wichtiger Unterschied des zweiten Ausführungsbeispiels gegenüber dem ersten Ausführungsbeispiel besteht darin, daß kein Stellregelkreis 78 mehr verwendet wird, d. h., kein separater Regelkreis für den Stellantrieb 79 mehr besteht. Ein solcher Regelkreis 78, wie er im ersten Ausführungsbeispiel verwendet wird, benötigt einen Geber zur Lagerückmeldung für die Stellung des Stellantriebs 79, z. B. ein Potentiometer. Beim zweiten Ausführungsbeispiel wird der Stellantrieb 79 durch eine Impulssteuerung 100 betrieben, wodurch sich die Lagerückmeldung und damit der zugehörige Geber erübrigt.

Die Klemmen 101 bis 103 sind mit den Ausgängen der UND-Gatter 21 bis 23 verbunden. Die Klemme 101 ist an den Rücksetzeingang R eines Flipflops 104 angeschlossen, dessen Ausgang über ein ODER-Gatter 105 mit einem Eingang eines UND-Gatters 106 verbunden ist. Der Ausgang des UND-Gatters 106 liefert die Taktsignale für den Takteingang C des als Rampenwert-Speicher eingesetzen Zählers 41. Wie beim ersten Ausführungsbeispiel steuert sowohl der Ausgang des UND-Gatters 23 (über die Klemme 103), wie auch der Ausgang »A > B« des digitalen Komparators 54 (über die Klemme 107) über das ODER-Gatter 43 den Zählrichtungseingang U/D des Zählers 41. Die Klemmen 101 bis 103 sind über ein ODER-Gatter 108 an einen ersten, dynamischen Triggereingang eines Zeitglieds 109 angeschlossen, dessen Ausgang sowohl an den Setzeingang S des Zählers 41 wie auch an einen Eingang eines UND-Gatters 110 angeschlossen ist. Dieser erster Triggereingang des Zeitglieds 109 ist durch eine positive Impulsflanke triggerbar. Die Klemme 102 ist sowohl an einen weiteren, invertierenden Eingang des UND-Gatters 110 wie auch an einen weiteren, dynamischen Triggereingang des Zeitglieds 109 angeschlossen, der durch eine negative Signalflanke triggerbar ist. Die Klemmen 102, 103 sind weiterhin über ein ODER-Gatter 111 an den Befehlseingang »A = 0« eines digitalen Komparators 112 angeschlossen. Der Ausgang »A = B« ist mit dem Setzeingang S des Flipflops 104 verbunden. Der Ausgang des ODER-Gatters 111 ist zusätzlich sowohl an einen Eingang eines ODER-Gatters 113, wie auch an einen weiteren Eingang des ODER-Gatters 105 angeschlossen. Der Ausgang des Flipflops 104 ist über das ODER-Gatter 113 an den Umschalteingang einer vorzugsweise als Multiplexer ausgebildeten Umschaltvorrichtung 114 angeschlossen.

Der an der Klemmenordnung 53 anliegende Istwert ist an die Eingänge B eines Addierers 115, an die Zahleneingänge eines digitalen Zählers 116, an die Zahleneingänge B eines Subtrahierers 117, an die Adresseneingänge eines Festwertspeichers (ROM) 118 sowie an die Istwert-Eingänge einer Regelungs-Vergleichsstelle 119 angelegt. Der über die Ausgänge des Zählers 46 an eine Klemmenanordnung 120 angelegte Sollwert ist einmal an die Zahleneingänge B des Komparators 112 und weiterhin an erste Zahleneingänge der Umschaltvorrichtung 114 angelegt. Die den Rampenwert führenden Zahlenausgänge des Zählers 41 sind mit Zahleneingängen A des Komparators 112, mit Zahleneingängen A des Subtrahierers 117 sowie mit zweiten Eingängen der Umschaltvorrichtung 114 verbunden. Zahlenausgänge »B — A« des Komparators 112 sind mit Zahleneingängen eines Zahlen-Frequenz-Wandlers 121 verbunden, dessen variable Ausgangsfrequenz f4 an einen weiteren Eingang des UND-Gatters 106 angelegt ist. Die Zahlenausgänge »A — B« des Subtrahierers 117 sind mit Zahleneingängen B eines Komparators 122 verbunden, an dessen Zahleneingängen A eine feste Binärzahl $\Delta$Y angelegt ist. Der Ausgang »A größer als B« ist an einen weiteren Eingang des UND-Gatters 106 angeschlossen.

An die Zahleneingänge A des Addierers 115 ist die feste Binärzahl $\Delta$X angelegt. Die Zahlenausgänge »A + B« sind Zahleneingängen des Zählers 41 zugeführt.

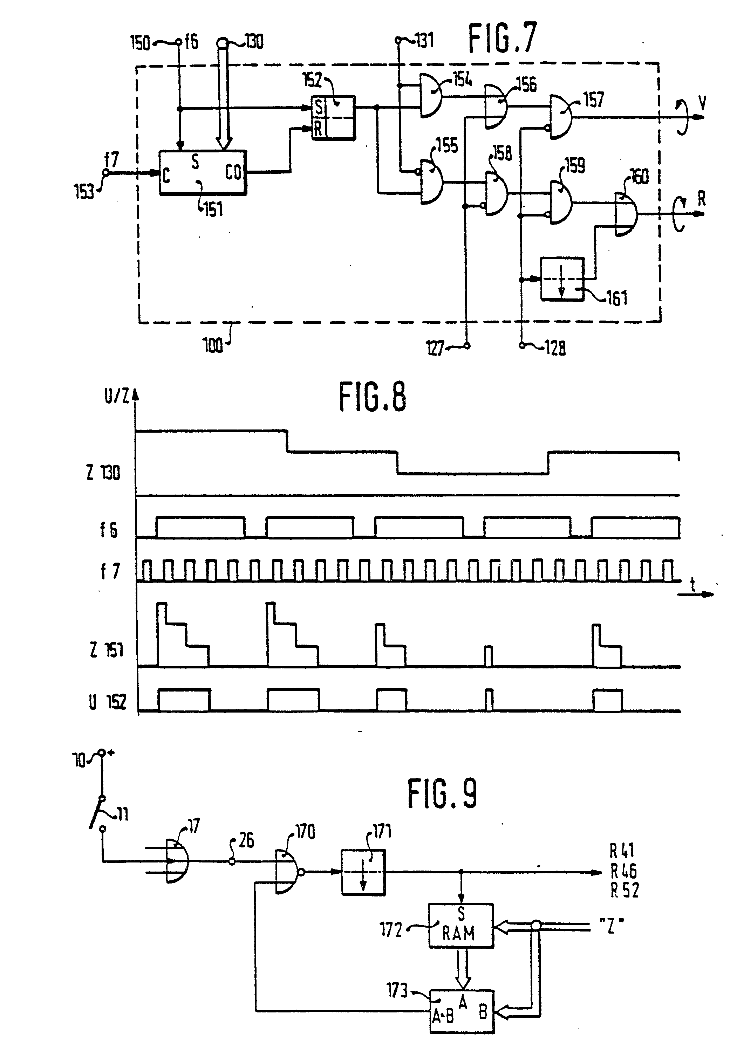

Der Ausgang des UND-Gatters 110, die Klemme 107 sowie eine mit dem Ausgang des Flipflops 19 verbundene Klemme 123 sind an Eingänge eines UND-Gatters 124 angeschlossen, dessen Ausgang mit dem Setzeingang S des Zählers 116 sowie mit dem Setzeingang eines Flipflops 125 verbunden ist. Über eine Klemme 126 ist dem Takteingang C des Zählers 116 eine Taktfrequenz f5 zugeführt. Der Überlaufausgang CO (Carry out) des Zählers 116 ist mit dem Rücksetzeingang R des Flipflops 125 verbunden, dessen Ausgang über eine Klemme 127 mit einem Eingang der Impulssteuerung 100 verbunden. Eine vorteilhafte, schaltungsmäßige Ausgestaltung einer solchen Impulssteuerung 100 ist im Zusammenhang mit Fig. 7 näher beschrieben. Die Klemme 123 ist weiterhin über eine Klemme 128 ebenfalls mit einem Eingang der Impulssteuerung 100 verbunden.

Die Zahlenausgänge der Umschaltvorrichtung 114 sind an Istwert-Eingänge der Regelungs-Vergleichsstelle 119 angeschlossen, deren Ausgänge an Eingänge A eines digitalen Multiplizierers 129 angeschlossen sind. Die Zahlenausgänge des Festwertspeichers 118 sind an Zahleneingänge B dieses Multiplizierers 129 angeschlossen. Die Zahlenausgänge »A × B« sind über den P (ID)-Regler 61 und eine Klemmenanordnung 130 mit Eingängen der Impulssteuerung 100 verbunden. Ein vom Vorzeichen der Regelabweichung abhängiges Signal ist über eine Klemme 131 ebenfalls der Impulssteuerung 100 zugeführt.

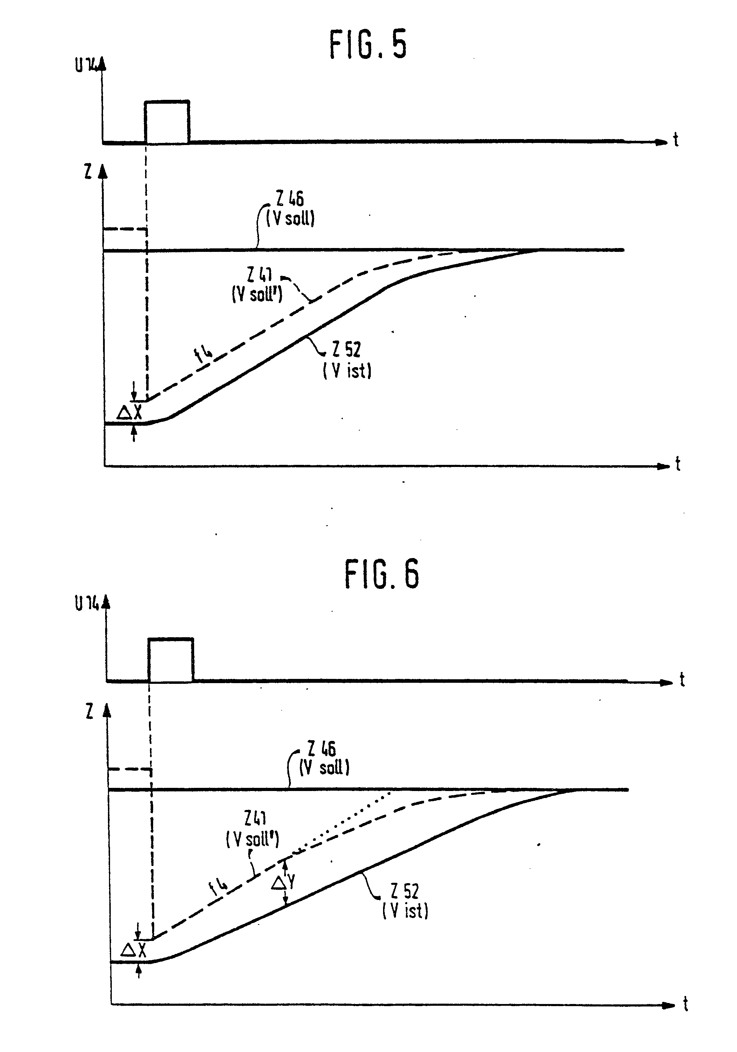

Die Wirkungsweise der in Fig. 4 dargestellten Regeleinrichtung soll in folgendem u. a. anhand der Fig. 5 und 6 erläutert werden. Zunächst soll der Wiederaufnahmevorgang einer zuvor in der Sollwert-Speichereinrichtung 46 gespeicherten Geschwindigkeit beschrieben werden. Durch Betätigung der Wiederaufnahmetaste 14 erscheint ein entsprechendes Signal U14 an der Klemme 101. Durch dieses Signal wird über das ODER-Gatter 108 und das Zeitglied 109 der Zähler 41 auf einen Wert gesetzt, der dem Istwert zuzüglich dem festen Zahlenwert $\Delta$X entspricht. Weiterhin wird das Flipflop 104 gesetzt, so daß Taktimpulse f4 an den Takteingang des Zählers 41 gelangen können und infolge des an der Klemme 107 anliegenden 1-Signals aufwärts gezählt werden. Der Rampenwert steigt demzufolge gemäß der in Fig. 5 dargestellten unterbrochenen Linie an. Die Frequenz f4 ist von der Differenz Sollwert minus Rampenwert abhängig. Ist die Differenz z. B. größer als 10 km/h, so kann f4 durch entsprechende Dimensionierung des Zahlen-Frequenz-Wandlers 121 konstant entsprechend der gewünschten maximalen Beschleunigung eingestellt werden. Je mehr sich daher der Rampenwert dem Sollwert nähert, desto geringer wird die Frequenz f4. Dies geschieht durch die Ansteuerung des Zahlen-Frequenz-Wandlers 121 durch den Ausgang »B — A« des Komparators 112. Der Rampenwert wird dadurch kontinuierlich und flach an den Sollwert herangeführt. Dasselbe geschieht mit dem Istwert, der dem Rampenwert mit einiger Verzögerung folgt. Durch dieses langsame Heranführen des Istwerts wird ein Überschwingen vermieden und ein sehr guter Komfort erreicht. Erreicht der Rampenwert den Sollwert, so wird am Ausgang »A = B« des Komparators 112 ein 1-Signal erzeugt, durch das das Flipflop 104 gesetzt wird. Das UND-Gatter 106 verhindert dadurch weitere Zählvorgänge. Weiterhin wird über das ODER-Gatter 113 die Umschaltvorrichtung 114 betätigt, so daß nunmehr anstelle des Rampenwerts vom Zähler 41 wieder der Sollwert von der Klemme 120 der Regelungs-Vergleichsstelle 119 zur Verfügung steht. Der Wert der Regelabweichung wird im Multiplizierer 129 mit einem istwertabhängigen Faktor multipliziert, um in kleinen Geschwindigkeitsbereichen eine verbesserte Stabilität zu erreichen. Dies bedeutet z. B., daß bei größeren Geschwindigkeiten der zu multiplizierende Faktor 1 ist, während bei kleineren Geschwindigkeiten dieser Faktor z. B. 0,3 ist, um so bei kleineren Geschwindigkeiten die Verstärkung des Reglers zu verkleinern. Dieser Faktor kann durch den Festwertspeicher 118 praktisch kontinuierlich verkleinert werden, indem entsprechende Adressen durch den Istwert der Fahrgeschwindigkeit angesprochen werden. Somit kann jedem Geschwindigkeits-Istwert ein bestimmter Multiplikationsfaktor zugeordnet werden. Durch diese multiplizierte Regelabweichung wird über den Regler 61 die Impulssteuerung 100 gesteuert, wie zu Fig. 7 noch näher erläutert wird.

Wenn gleichzeitig der gespeicherte Sollwert größer ist als der Istwert (Signal an der Klemme 107), das Flipflop 19 infolge einer Betätigung einer der Tasten 14 bis 16 gesetzt ist, (Signal an der Klemme 123) und die Taste 15 nicht betätigt ist (Signal am Ausgang des UND-Gatters 110), dann wird am Ausgang des UND-Gatters 124 ein Setzsignal für den Zähler 116 und das Flipflop 125 erzeugt. Der Zähler 116 übernimmt den augenblicklichen Istwert. Dieser Istwert wird durch die Taktsignale f5 abwärtsgezählt. Beim Nulldurchgang wird ein Rücksetzsignal für das Flipflop 125 erzeugt, so daß während des Abwärtszählens ein 1-Signal an der Klemme 127 anliegt. Die Länge dieses Signals ist istwert-abhängig und steuert die Stellvorrichtung 79 — wie zu Fig. 7 noch näher erläutert wird — in eine istwert-abhängige Stellung. Da die Stellvorrichtung 79 nach jeder Betätigung der Bremse, der Kupplung oder dem Abschalten der Regeleinrichtung auf die Null-Stellung zurückgeführt wird (0-Signal an der Klemme 123), beschleunigt dieses Anfahren des Istwerts durch die Stellvorrichtung 79 das Erreichen des gewünschten Geschwindigkeitswerts. Dieser Istwert wird mit größtmöglicher Stellgeschwindigkeit, unabhängig von der Regelabweichung angefahren. Durch die Logik des UND-Gatters 124 erfolgt dies in folgenden Fällen:

Beim Betätigen der Beschleunigungstaste 16 (Signal an der Klemme 103), bei Betätigen der Wiederaufnahmetaste 14 (Signal an der Klemme 101), wenn der anzufahrende, gespeicherte Geschwindigkeitswert höher als der Istwert liegt, und schließlich beim Loslassen der Verzögerungstaste 15 (Signal-Rückflanke an der Klemme 102).

In Fig. 6 ist der Fall dargestellt, daß nach Betätigung der Wiederaufnahmetaste 14, z. B. infolge einer Steigung der Fahrbahn der Istwert dem sich verändernden Rampenwert nicht folgen kann. Eine zu große Differenz zwischen diesen Werten würde bewirken, daß sich die Rampe beliebig weit vom Istwert entfernen kann. Verschwindet nun die Last, so erfährt das Fahrzeug eine viel zu große Beschleunigung (Vollgas). Dies wird dadurch verhindert, daß bei einer Abweichung $> \Delta Y$ der Komparator 122 ausgangsseitig ein 0-Signal erzeugt, durch das das UND-Gatter 106 für Taktsignale f4 gesperrt wird. Die Rampe wird dadurch kurz gestoppt, läuft jedoch gleich darauf wieder weiter, wenn die Differenz $\Delta Y$ durch den weiterhin ansteigenden Istwert wieder unterschritten wird. Durch dieses Ein- und Ausschalten der Zählfrequenz f4 für die Rampe verkleinert sich deren Steigung und läuft parallel zum Istwert. Durch diese Anpassung der Rampensteigung an die Istwert-Steigung wird auch bei Steigungen ein weicher Übergang auf die Sollgeschwindigkeit erreicht.

Der Beschleunigungsfall infolge Betätigung der Beschleunigungstaste 16 verläuft im wesentlichen gemäß Fig. 2. Unterschiede ergeben sich dadurch, daß einmal als Anfangswert in den Zähler 41 wiederum der Istwert zuzüglich $\Delta X$ übernommen wird. Infolge eines Signals am Ausgang des ODER-Gatters 111 werden im Komparator 112 die Zahleneingänge A auf den Wert 0 gesetzt, damit eine größtmögliche Differenz »B — A« erzeugt wird. Dies wiederum erzeugt eine höchstmögliche Rampenfrequenz f4. Wird die Taste 16 losgelassen, so wird gemäß dem ersten Ausführungsbeispiel der augenblicklich vorliegende Istwert in die Sollwert-Speicherung 46 übernommen. Im Gegensatz zum ersten Ausführungsbeispiel bleibt zu diesem Zeitpunkt vorliegende Rampenwert im Zähler 41 bestehen. Dies hat jedoch keine Bedeutung mehr, da gleichzeitig eine Umschaltung der Umschaltvorrichtung 114 auf die Sollwert-Speichereinrichtung 46 erfolgt.

Die Schaltung gemäß Fig. 7 zeigt eine vorteilhafte Ausführung der Impulssteuerung 100. Über eine Klemme 150 ist eine Taktfrequenz f6 sowohl dem Setzeingang eines Zählers 151, wie auch dem Setzeingang eines Flipflops 152 zugeführt. Eine weitere, höherfrequente Taktfrequenz f7, z. B. die Frequenz des Drehzahlgebers 47, ist über eine Klemme 153 zum Takteingang C des Zählers 151 zugeführt. Über die Klemmenanordnung 130 sind die Zahlenausgänge des Reglers 61 mit den Zahleneingängen des Zählers 151 verbunden. Der Überlaufausgang CO des Zählers 151 ist mit dem Rücksetzeingang des Flipflops 152 verbunden, dessen Ausgang an je einem Eingang zweier UND-Gatter 154, 155 angeschlossen ist. Die Klemme 131 ist mit einem zweiten Eingang des UND-Gatters 154 und mit einem zweitem, invertierenden Eingang des UND-Gatters 155 verbunden. Der Ausgang des UND-Gatters 154 ist über ein ODER-Gatter 156 mit einem Eingang eines UND-Gatters 157 verbunden, dessen Ausgang den Vorlauf V des Stellantriebs 79 steuert. Der Ausgang des UND-Gatters 155 ist über ein UND-Gatter 158 mit einem Eingang eines UND-Gatters 159 verbunden, dessen Ausgang über ein ODER-Gatter 160 den Rücklauf R des Stellantriebs 79 steuert. Die Klemme 127 ist mit einem weiteren Eingang des ODER-Gatters 156 sowie mit einem weiteren, invertierenden Eingang des UND-Gatters 158 verbunden. Die Klemme 128 ist einmal an je einem invertierenden Eingang der UND-Gatter 157, 159 und schließlich über ein Zeitglied 161 an einen weiteren Eingang des ODER-Gatters 160 angeschlossen.

Die Wirkungsweise der in Fig. 7 dargestellten Impulssteuerung 100 besteht in der Umwandlung einer an der Klemmenanordnung 130 anliegenden Binärzahl in eine Impulsfolge, deren Tastverhältnis proportional zu dieser Binärzahl ist. Wesentlich dabei ist, daß die Impulse dieser Ausgangsimpulse ganzzahlige Vielfache von Perioden oder Halbperioden der Eingangsimpulsfolge ist. Dies ist vor allem bei der Realisierung der Regeleinrichtung durch einen Mikrorechner von Bedeutung, da dort keine Parallelverarbeitung möglich ist. So wird jeweils nach einem Rechenzyklus — während der Meßphase — der Motor mit einer durch die Rechnung festgelegten Anzahl von Drehzahlgeber-Perioden (oder Halbperioden) angesteuert. Im in Fig. 8 dargestellten Diagramm ist eine sich verändernde Binärzahl Z130 dargestellt. Mit jeder Anstiegsflanke der Signalfolge f6 wird die zu diesem Zeitpunkt anliegende Binärzahl in den Zähler 151 übernommen. Gleichzeitig wird das Flipflop 152 gesetzt. Im Takt der höherfrequenten Taktfrequenz f7 wird dieser übernommene Zahlenwert abwärts gezählt, und beim Überlaufimpuls wird das Flipflop 152 rückgesetzt. Dadurch entsteht am Ausgang des Flipflops 152 eine Signalfolge U152, deren Tastverhältnis proportional zur Binärzahl Z130 ist. Entsprechend dem an der Klemme 131 anliegenden Signal zur Festlegung der Verstellrichtung liegt diese Signalfolge U152 an einem der Ausgänge der UND-Gatter 154, 155 an. Liegt an der Klemme 127 ein 0-Signal (kein Vorlauf des Stellantriebs 79 auf dem Istwert) und an der Klemme 128 ein 1-Signal (keine Abschaltung des

8

Stellantriebs infolge z. B. einer Bremsung), so steuern die Ausgänge der UND-Gatter 154, 155 alternativ in Abhängigkeit der Stellrichtung einen der Ausgänge V bzw. R der Impulssteuerung 100. Die Impulsfolge U152 wirkt sich dabei entweder auf den Vorlauf oder auf den Rücklauf des Stellantriebs 79 aus. Wird gemäß der Beschreibung zu Fig. 4 an der Klemme 127 ein Vorlaufsignal für den Stellantrieb 79 auf den Istwert erzeugt, so wird das UND-Gatter 158 gesperrt, und dieses Signal wirkt sich direkt auf den Ausgang V aus.

Wird infolge eines Abschaltvorgangs (z. B. Bremsung) ein 1-Signal an die Klemme 128 angelegt, so werden die UND-Gatter 157, 159 gesperrt, und die Impulsfolge U152 kann nicht mehr zum Stellantrieb 79 gelangen. Mit diesem 1-Signal wird das Zeitglied 161 getriggert, wodurch während der Haltezeit dieses Zeitglieds ein Rücklaufsignal am Ausgang R für den Stellantrieb 79 erzeugt wird. Durch dieses Rücklaufsignal wird der Stellantrieb 79 in die 0-Stellung zurückgeführt.

Natürlich kann der Stellantrieb 79 nicht direkt durch die Ausgänge der Gatter 157, 160 gesteuert werden, sondern es müssen Verstärkerstufen dazwischen geschaltet sein. Eine solche Endstufenanordnung ist z. B. aus der DE-OS 2 609 842 bekannt. Weiterhin kann anstelle der Frequenz f7 auch vorteilhaft die Ausgangsfrequenz des Drehzahlgebers 47 herangezogen werden.

In Fig. 9 ist eine Initialisierungsschaltung für die Speichervorrichtungen (z. B. Flipflops und Zähler) dargestellt. Wie beim ersten Ausführungsbeispiel sind die Eingänge des ODER-Gatters 18 mit Einrichtungen verbunden, die eine Initialisierung, also eine Rücksetzung der Speichereinrichtungen bewirken sollen. Der Hauptschalter 11 ist jedoch nunmehr an einem dynamischen Eingang dieses ODER-Gatters 18 angeschlossen. Die Ausgangsklemme 26 ist wiederum mit sämtlichen Speichereinrichtungen mit Ausnahme der Istwert-Speichereinrichtung 52, der Sollwert-Speichereinrichtung 46 und der Rampenwert-Speichereinrichtung 41 verbunden und setzt diese Speichereinrichtungen bei einem Ausgangssignal des ODER-Gatters 18 in ihre Grundstellung zurück. Die Klemme 26 ist über ein NOR-Gatter 170 mit dem Triggereingang eines Zeitgliedes 171 verbunden, dessen Ausgang sowohl mit den Rücksetzeingängen der Speichereinrichtungen 41, 46, 52, wie auch mit dem Setzeingang eines Arbeitsspeichers (RAM) 172 verbunden ist. Die Zahlenausgänge dieses Arbeitsspeichers 172 sind mit Zahleneingängen A eines Komparators 173 verbunden, dessen Ausgang »A = B« an einen weiteren Eingang des NOR-Gatters 170 angeschlossen ist. Die Zahleneingänge B des Komparators 173 sowie Zahleneingänge des Arbeitsspeichers 172 sind mit einer festen Binärzahl Z beaufschlagt.

Die Wirkungsweise der in Fig. 9 dargestellten Initialisierungsschaltung besteht darin, daß aufgrund des dynamischen Eingangs des ODER-Gatters 17 beim Schließen des Hauptschalters 11, also beim Einschalten der Anlage, nach einem kurzen 1-Signal am Ausgang des ODER-Gatters 17 wieder ein 0-Signal erscheint. Da die Bedingung »A = B« im Komparator 173 zunächst nicht erfüllt ist, wird das Zeitglied 171 getriggert und setzt die Speichereinrichtungen 41, 46, 52 zurück. Gleichzeitig wird die Binärzahl Z in den Arbeitsspeicher 172 übernommen, so daß nunmehr die Bedingung »A = B« erüllt ist und das NOR-Gatter 170 für jede weitere Art von Signalen an der Klemme 26 gesperrt bleibt. Ein weiteres Rücksetzen der Speichereinrichtungen 41, 46, 52 ist dadurch nicht mehr möglich, auch nicht durch eingangsseitige Störimpulse. Ein Rücksetzen dieser Speichereinrichtungen 41, 46, 52 ist erst wieder möglich, wenn die Spannungsversorgung ausgeschaltet war und der Hauptschalter 11 wiederum geschlossen wurde.

Die Funktionen der zuvor beschriebenen Einrichtungen können vorzugsweise durch einen Mikrorechner realisiert werden, insbesondere einen 1-Chip-Mikrorechner, wie er im Handel erhältlich ist. Dies führt zu einer einfachen und billigen Realisierung bei geringem Platzbedarf. Die zuvor beschriebenen Funktionen werden einem solchen Mikrorechner in einer dem Fachmann geläufigen Weise als Programm eingegeben.

Im folgenden sollen in tabellarischer Form im Handel erhältliche Bauteile aufgeführt werden, die z. B. in der angegebenen Schaltung Verwendung finden können. Die Bauteile sind mit ihrer Typennummer gekennzeichnet. Der in Klammern angegebene Hersteller dient als Beispiel und muß nicht der einzige Hersteller für das jeweilige Bauteil sein:

| | |
|---|---|
| 1-Chip-Mikrorechner | 8048 bzw. 8021 (Intel) |
| Festwertspeicher (ROM) | CDP 1833 CD (RCA) |
| Digitaler Zähler | 4029 (RCA) |
| Digitaler Komparator | MC 14585 (Motorola) |
| Arbeitsspeicher (RAM) | CDP 1824 (RCA) |
| Subtrahierer (Addierer) | CD 40181B (RCA) |
| Multiplizierer | CD 4527B (RCA) |
| Multiplexer | 4052 (RCA) |
| Zahlen-Frequenz-Wandler | SN 7497N (TI) |

**Patentansprüche**

1. Verfahren zur digitalen Regelung der Fahrgeschwindigkeit eines Kraftfahrzeuges mittels eines Istwerts und mittels eines in einem Speicher ablegbaren Sollwertes, der einer gewünschten Fahrgeschwindigkeit proportional ist, wobei bei der Betätigung mindestens einer Schaltvorrichtung der Istwert in den Sollwertspeicher übertragbar ist, mit einem Istwert-Sollwert-Vergleich, dessen Differenzsignal die Nachregelung der Geschwindigkeit des Fahrzeuges bewirkt, dadurch gekennzeichnet, daß ein Hilfssollwert in einer zweiten Speichervorrichtung vorgegeben wird, der durch digitale Zählvorgänge vom Istwert ausgehend rampenförmig bis zum Sollwert ansteigt, daß während des Beschleunigungsvorganges für den Istwert-Sollwert-Vergleich der Hilfssollwert verwendet wird und daß die Rampe zwei unterschiedliche Steigungen aufweist, wobei eine betragsmäßig zunächst größere Steigung in eine betragsmäßig kleinere Steigung übergeht, sobald der Istwert dem Sollwert entspricht und infolgedessen als Sollwert im Sollwertspeicher abgespeichert wird.

2. Verfahren nach Anspruch 1, dadurch gekennzeichnet, daß die Rampe zwei betragsmäßig unterschiedliche Steigungen aufweist, wobei eine zunächst größere Steigung in eine kleinere Steigung übergeht, sobald der Istwert im Fall eines vorgegebenen Sollwertes eine vorgegebene Differenz ($\Delta$V) zum Sollwert erreicht hat.

3. Verfahren nach Anspruch 1 oder 2, dadurch gekennzeichnet, daß im Falle eines vorgegebenen Sollwertes die Steigung der Rampe in Abhängigkeit von der Differenz zwischen dem Sollwert und dem Hilfssollwert ständig kleiner wird.

4. Verfahren nach einem der Ansprüche 1 bis 3, dadurch gekennzeichnet, daß mittels einer Schaltvorrichtung (15 bzw. 16) zur Auslösung eines Beschleunigungsvorganges im wesentlichen der augenblickliche Istwert als Hilfssollwert gespeichert wird und dieser Wert durch eine vorgegebene Rampe für die Dauer der Betätigung der Schaltvorrichtung (15 bzw. 16) verändert wird und daß unmittelbar danach der neue Istwert in den Sollwertspeicher (46) übernommen wird.

5. Digitale Regeleinrichtung für die Fahrgeschwindigkeit eines Kraftfahrzeuges mit einem Istwertgeber (47), mit einer Speichereinrichtung (46) für einen der gewünschten Fahrgeschwindigkeit proportionalen Sollwert, wobei bei der Betätigung wenigstens einer Schaltvorrichtung der Istwert in die Sollwert-Speichereinrichtung (46) übertragbar ist, mit Mitteln zur Durchführung eines Istwert-Sollwert-Vergleichs und mit einer durch die Differenz dieser Werte steuerbaren Vorrichtung, die auf ein die Geschwindigkeit des Fahrzeuges beeinflussendes Element einwirkt, dadurch gekennzeichnet, daß eine zweite Hilfssollwert-Speichereinrichtung (41) vorgesehen ist, in die ein Istwert übernehmbar ist, daß durch eine Zählvorrichtung (35, 37, 39, 121) der Wert der zweiten Speichereinrichtung (41) rampenförmig veränderbar ist, daß dieser Wert der zweiten Speichereinrichtung (41) für eine Regeleinrichtung (61) während des Beschleunigungsvorganges als Sollwert dient und daß die Zählvorrichtung (35, 37, 39, 121) unterschiedliche Frequenzen aufweist, wobei die Zählfrequenz von einer hohen Frequenz auf eine niedrige Frequenz und die Zählvorrichtung umschaltbar sind, sobald der Istwert durch eine Schaltvorrichtung (15 bzw. 16) in die Sollwert-Speichereinrichtung (46) übernommen ist.

6. Einrichtung nach Anspruch 5, dadurch gekennzeichnet, daß bei einem gespeicherten Sollwert in der Sollwert-Speichereinrichtung (46) und bei der Betätigung einer ersten Schaltvorrichtung (14) in die zweite Speichereinrichtung (41) im wesentlichen der augenblickliche Istwert eingelesen wird, daß zur Veränderung dieses Wertes eine erste Frequenz der zweiten Speichereinrichtung (41) zugeführt ist und daß auf eine zweite, niedrigere Frequenz umgeschaltet wird, bis der Hilfssollwert dem Sollwert entspricht, wenn der Istwert vom gespeicherten Sollwert um einen festgelegten Betrag ($\Delta$V) abweicht.

7. Einrichtung nach Anspruch 5, dadurch gekennzeichnet, daß bei einem gespeicherten Sollwert in der Sollwert-Speichereinrichtung (46) und bei der Betätigung einer ersten Schaltvorrichtung (14) in die zweite Speichereinrichtung (41) im wesentlichen der augenblickliche Istwert eingelesen wird und daß zur Veränderung dieses Wertes der zweiten Speichereinrichtung (41) eine Frequenz zugeführt ist, die in Abhängigkeit von der Differenz zwischen dem gespeicherten Sollwert und dem aktuellen Wert der zweiten Speichereinrichtung (41) veränderbar ist.

8. Einrichtung nach einem der Ansprüche 6 oder 7, dadurch gekennzeichnet, daß bei der Betätigung einer weiteren Schaltvorrichtung (15 bzw.16) zur Auslösung eines Beschleunigungsvorganges im wesentlichen der augenblickliche Istwert in die zweite Speichereinrichtung (41) eingelesen wird, daß während der Dauer der Betätigung der weiteren Schaltvorrichtung (15 bzw. 16) der gespeicherte Wert mittels einer Zählvorrichtung (35, 37, 39, 121) veränderbar ist und daß der Istwert unmittelbar danach in die Sollwert-Speichereinrichtung (46) übernommen wird.

9. Einrichtung nach einem der Ansprüche 5 und 8, dadurch gekennzeichnet, daß Mittel (115) vorgesehen sind, durch die dem augenblicklichen Istwert ein Vorgabewert zugeführt wird und daß der so geringfügig veränderte Istwert in die zweite Speichereinrichtung (41) übernehmbar ist.

10. Einrichtung nach Anspruch 8 oder 9, dadurch gekennzeichnet, daß nach Betätigung der weiteren Schaltvorrichtung (15 bzw. 16) die kleinere Rampensteigung mit umgekehrtem Vorzeichen wirksam wird, bis der Istwert dem Sollwert entspricht.

11. Einrichtung nach Anspruch 8 oder 9, dadurch gekennzeichnet, daß Mittel (112, 121) zur Festlegung einer variablen Rampensteigung einer Steuereinrichtung (111, Eingang A = 0 von 112) aufweisen, durch die während einer Betätigung der weiteren Schaltvorrichtung (15 bzw. 16) die Rampensteigung auf einen maximalen Wert festlegbar ist.

12. Einrichtung nach einem der Ansprüche 8 bis 11, dadurch gekennzeichnet, daß je eine weitere Schaltvorrichtung (15, 16) zur Auslösung eines positiven und eines negativen Beschleunigungsvor-

0 015 281

gangs vorgesehen ist.

13. Einrichtung nach einem der Ansprüche 8 bis 11, dadurch gekennzeichnet, daß bei Betätigung einer der weiteren Schaltvorrichtungen (15, 16) zusätzlich der Istwert in die Sollwert-Speichereinrichtung (46) übernommen wird, um bei kurzzeitiger Betätigung den augenblicklichen Istwert als weiteren Soll-Fahrgeschwindigkeitswert vorzugeben.

14. Einrichtung nach einem der Ansprüche 5 bis 13, dadurch gekennzeichnet, daß eine Abschaltvorrichtung (73, 74, 77) zum Stoppen der Rampen vorgesehen ist, die durch Erreichen wenigstens eines vorgebbaren Endwerts (Smin bzw. Smax) auslösbar ist.

15. Einrichtung nach einem der Ansprüche 5 bis 14, dadurch gekennzeichnet, daß Mittel (117) zur Erkennung der Differenz zwischen Rampenwert und Istwert vorgesehen sind und daß eine Schwellwerterkennung (122) vorgesehen ist, durch die bei Überschreiten einer maximal zulässigen Differenz eine weitere Veränderung des Rampenwerts verhinderbar ist.

16. Einrichtung nach einem der Ansprüche 5 bis 15, dadurch gekennzeichnet, daß der in der Sollwert-Speichereinrichtung (46) gespeicherte Sollwert mit Hilfe eines Festwertspeichers (ROM) (64) entsprechend der Arbeitskennlinie der Brennkraftmaschine und der Regeleinrichtung modifizierbar ist.

17. Einrichtung nach einem der Ansprüche 5 bis 16, dadurch gekennzeichnet, daß bei Unterschreiten eines vorgebbaren Werts (Vmin) durch den Istwert eine Abschaltung der Regeleinrichtung bewirkt wird.

18. Einrichtung nach einem der Ansprüche 5 bis 17, dadurch gekennzeichnet, daß bei Überschreiten eines vorgebbaren Werts durch die Differenz Spitzenwert (max. Sollwert) minus Istwert eine Abschaltung der Regeleinrichtung bewirkt wird.

19. Einrichtung nach Anspruch 18, dadurch gekennzeichnet, daß der vorgebbare Wert durch Adressierung eines Festwertspeichers (65) in Abhängigkeit der Fahrgeschwindigkeit steht.

20. Einrichtung nach einem der Ansprüche 5 bis 19, dadurch gekennzeichnet, daß das Auftreten bestimmter Vorgänge im Kraftfahrzeug, insbesondere Brems- oder Kupplungsvorgänge, eine Abschaltung der Regeleinrichtung bewirkt.

21. Einrichtung nach einem der Ansprüche 5 bis 20, dadurch gekennzeichnet, daß durch die Betätigung einer der Schaltvorrichtungen (14, 15, 16) eine Verriegelung einer Stellvorrichtung (78, 100) aufhebbar ist.

22. Einrichtung nach einem der Ansprüche 5 bis 21, dadurch gekennzeichnet, daß dem Istwert-Geber (50) ein Istwert-Speicher (52) zugeordnet ist, in den ständig der aktuelle Istwert eingespeichert wird.

23. Einrichtung nach einem der Ansprüche 5 bis 22, dadurch gekennzeichnet, daß bei Betätigung einer der Schaltvorrichtungen (14, 15, 16) und/oder bei Auftreten eines die Abschaltung der Regeleinrichtung bewirkenden Vorgangs eine Rücksetzung aller Speichereinrichtungen mit Ausnahme der Sollwert-Speichereinrichtung (46) der Istwert-Speichereinrichtung (52) und vorzugsweise der Rampenwert-Speichereinrichtung (41) auslösbar ist.

24. Einrichtung nach einem der Ansprüche 5 bis 23, dadurch gekennzeichnet, daß bei Einschalten der Versorgungsspannung sämtliche Speichereinrichtungen rückgesetzt werden und daß eine Verriegelungseinrichtung (170 bis 173) vorgesehen ist, durch die nachfolgende Signale die Speichereinrichtungen (52, 46, 41) nicht mehr rücksetzen können.

25. Einrichtung nach einem der Ansprüche 5 bis 24, dadurch gekennzeichnet, daß eine Umschaltvorrichtung (114) zur Umschaltung zwischen Sollwert-Speichereinrichtung (46) und Rampenwert-Speichereinrichtung (41) vorgesehen ist, wobei als Sollwert zur Regelung der Stellvorrichtung (78, 100) der Inhalt der Rampenwert-Speichereinrichtung (41) durchgeschaltet ist, bis Gleichheit zwischen Rampenwert und Sollwert vorliegt oder während die weitere Schaltvorrichtung (15 bzw. 16) betätigt ist.

26. Einrichtung nach einem der Ansprüche 5 bis 25, dadurch gekennzeichnet, daß Mittel (118, 129) zur Multiplikation der Regeldifferenz mit einem istwert-abhängigen Faktor vorgesehen ist.

27. Einrichtung nach einem der Ansprüche 5 bis 26, dadurch gekennzeichnet, daß als Stellvorrichtung ein Stellregelkreis (78) vorgesehen ist.

28. Einrichtung nach einem der Ansprüche 5 bis 26, dadurch gekennzeichnet, daß als Stellvorrichtung eine Impulssteuerung (100) vorgesehen ist, in der die Stellgröße in eine Impulsspannung mit Stellgrößen-abhängigem Tastverhältnis umgewandelt wird.

29. Einrichtung nach Anspruch 28, dadurch gekennzeichnet, daß die Impulssteuerung (100) eine Zähleinrichtung (151) enthält, in die im Takt einer ersten Taktfrequenz (f6) die jeweils als binäre Zahl anliegende Stellgröße übernommen wird, daß die übernommenen Werte im Takt einer zweiten, höheren Frequenz (f7) ausgezählt werden, wobei die Auszählzeit jeweils die Impulsbreite der Signale der Impulsspannung vorgibt.

30. Einrichtung nach Anspruch 29, dadurch gekennzeichnet, daß als höhere Frequenz (f7) die Ausgangsfrequenz des Drehzahlgebers (47) vorgesehen ist und daß die Ansteuerung des Stellantriebs (79) jeweils während einer Meßphase dieser Frequenz (f7) erfolgt.

31. Einrichtung nach einem der Ansprüche 5 bis 31, dadurch gekennzeichnet, daß der Stellantrieb auch direkt durch eine Steuervorrichtung (116, 125, 156, 158) einschaltbar ist, durch die der Stellantrieb (79) bei Betätigung wenigstens einer Schaltvorrichtung (14 bis 16) in eine dem derzeit vorliegenden Istwert entsprechende Stellung bewegbar ist.

11

# 0 015 281

## Claims

1. Process for the digital control of the driving speed of a motor vehicle by means of an actual value and by means of a nominal value which can be filed in a memory and which is proportional to a desired driving speed, and in which, when at least one switching device is activated, the actual value can be transferred to the nominal-value memory with an actual-value/nominal-value comparison, the difference signal of which causes the speed of the vehicle to be readjusted, characterised in that an auxiliary nominal value is preset in a second memory device and as a result of digital counting operations increases from the actual value in the form of a ramp up to the nominal value, in that during the acceleration operation the auxiliary nominal value is used for the actual-value/nominal-value comparison, and in that the ramp has two different slopes, an initial slope of greater amount merging into a slope of smaller amount as soon as the actual value corresponds to the nominal value and is consequently stored as a nominal value in the nominal-value memory.

2. Process according to claim 1, characterised in that the ramp has two slopes of different amounts, an initial larger slope merging into a smaller slope as soon as, where there is a preset nominal value, the actual value has reached a preset difference ($\Delta$ V) relative to the nominal value.

3. Process according to claim 1 or 2, characterised in that, where there is a preset nominal value, the slope of the ramp becomes steadily smaller as a function of the difference between the nominal value and the auxiliary nominal value.

4. Process according to one of claims 1 to 3, characterised in that, essentially, the instantaneous actual value is stored as an auxliliary nominal value by means of a switching device (15 or 16) for the initiation of an acceleration operation, and this value is varied by means of a preset ramp for the duration of actuation of the switching device (15 or 16), and in that immediately after this the new actual value is received in the nominal-value memory (46).

5. Digital control device for the driving speed of a motor vehicle, with an actualvalue transmitter (47), with a memory device (46) for a nominal value proportional to the desired driving speed, the actual value being transferable to the nominal-value memory device (46) when at least one switching device is actuated, with means for carrying out an actualvalue/nominal-value comparison, and with a device which can be controlled by the difference between these values and which acts on an element influencing the speed of the vehicle, characterised in that there is a second auxliary-nominal-value memory device (41) in which an actual value can be received, in that the value of the second memory device (41) can be varied in the form of a ramp by means of a counting device (35, 37, 39, 121), in that this value of the second memory device (41) serves as a nominal value for a control device (61) during the acceleration operation, and in that the counting device (35, 37, 39, 121) has different frequencies, and the counting frequency can be changed over from a high frequency to a low frequency and the counting device changed over as soon as the actual value is received in the nominal-value memory device (46) by means of a switching device (15 or 16).

6. Device according to claim 5, characterides in that, when a nominal value is stored in the nominal value memory device (46) and when a first switching device (14) ist actuated, essentially, the instantaneous actual value is read into the second memory device (41), in that, to vary this value, a first frequency is fed to the second memory device (41), and in that a change-over to a second lower frequency ist made until the auxiliary nominal value corresponds to the nominal value when the actual value differs from the stored nominal value by a fixed amount.($\Delta$ V)

7. Device according to claim 5, characterised in that, when a nominal value is stored in the nominal-value memory device (46) and when a first switching device (14) ist actuated, essentially, the instantaneous actual value is read into the second memory device (41), and in that to vary this value of the second memory device (41), a frequency is supplied which ist variable as a function of the difference between the stored nominal value and the current value of the second memory device (41).

8. Device according to one of claims 6 or 7, characterised in that, when a further switching device (15 or 16) for the initiation of an acceleration operation is actuated, essentially the instantaneous actual value is read into the second memory device (41), in that the stored value can be varied by means of a counting device (35, 37, 39, 121) for the duration of actuation of the further switching device (15 or 16) and in that immediately after this the actual value is received in the nominal-value memory device (46).

9. Device according to one of claims 5 and 8 characterised in that there are means (115) by which a preset value is fed to the instantaneous actual value and in that the actual value varied slightly in this way can be received in the second memory device (41).

10. Device according to claim 8 or 9, characterised in that, after the further switching device (15 or 16) has been actuated, the smaller ramp slope takes effect with a reversed sign, until the actual value corresponds to the nominal value.

11. Device according to claim 8 or 9, characterised in that means (112, 121) for fixing a variable ramp slope have a control device (111, input A = 0 of 112), by means of which the ramp slope can be fixed at a maximum value during actuation of the further switching device (15 or 16).

12. Device according to one of claims 8 to 11, characterised in that two further devices (15, 16) are provided for initiating a positive and a negative acceleration operation, respectively.

13. Device according to one of claims 8 to 11, characterised in that, when one of the further switching devices (15,16) is actuated, the actual value is additionally received in the nominal-value memory device (46), in order), during brief actuation, to preset the instantaneous actual value as a further nominal driving-speed value.

14. Device according to one of claims 5 to 13, characterised in that a cut-off device (73, 74, 77) for stopping the ramps is provided, and this can be triggered when at least one presettable final value (Smin or Smax) is reached.

15. Device according to one of claims 5 to 14, characterised in that means (117) are provided for detecting the difference between ramp value and actual value, and in that there is a threshhold detector (122), by means of which a further variation in the ramp value can be prevented when a maximum permissible difference is exceeded.

16. Device according to one of claims 5 to 15, characterised in that the nominal value stored in the nominal-value memory device (46) can be modified by means of a read-only memory (ROM) (64) according to the working characteristic of the internal-combustion engine and the control device.

17. Device according to one of claims 5 to 16, characterised in that the control device is cut off when the actual value falls below a presettable value (Vmin).

18. Device according to one of claims 5 to 17, characterised in that the control device is cut off when the difference between the peak value (the maximum nominal value) and the actual value exceeds a presettable value.

19. Device according to claim 18, characterised in that the presettable value is a function of the driving speed as a result of the addressing of a read-only memory (6).

20. Device according to one of claims 5 to 19, characterised in that the occurrence of specific operation in the motor vehicle, especially brake or clutch operation, causes the control device to be cut off.

21. Device according to one of claims 5 to 20, characterised in that the locking of an adjusting device (78, 100) can be cancelled as a result of the actuation of one of the switching devices (14, 15, 16,).

22. Device according to one of claims 5 to 21, characterised in that an actual-value memory (52), in which the current actual value is constantly stored, is assigned to the actual-value transmitter (50).

23. Device according to one of claims 5 to 22, characterised in that, when one of the switching devices (14, 15, 16) is actuated and/or when an operation causing the control device to be cut off occurs, a resetting of all the memory devices, with the exception of the nominal-value memory device (46), the actual-value memory device (52) and preferably the ramp-value memory device (41) can be triggered.

24. Device according to one of claims 5 to 23, characterised in that when the supply voltage is connected all the storage devices are reset, and in that there is a locking device (170 to 173), by means of which the subsequent signals can no longer reset the memory devices (52, 46, 41).

25. Device according to one of claims 5 to 24, characterised in that there is a change-over device (114) für changing over between the nominal value memory device (46) and the ramp-value memory device (41), the content of the ramp-value memory device (41) beeing switched through as a nominal value for controling the adjusting device (78, 100), until there is equality between the ramp value and the nominal value or while the further switching device (15 or 16) is actuated.

26. Device according to one of claims 5 to 25, characterised in that there are means (118, 129) for multiplying the control difference by a factor which is a function of the actual value.

27. Device according to one of claims 5 to 26, characterised in that an adjusting control loop (78) is provided as a adjusting device.

28. Device according to one of claims 5 to 26, characterised in that there is as an adjusting device a pulse control (100) in which the adjusting variable is converted into a pulse voltage with a duty factor which is a function of the adjusting variable.

29. Device according to claim 28, characterised in that the pulse control (100) contains a counting device (151) in which the particular adjusting variable applied as a binary is received at the rate of a first clock frequency (f6), and in that the received values are counted out at the rate of a second higher frequency (f7), the counting-out time pre-determining each time the pulse width of the signals of the pulse voltage.

30. Device according to claim 29, characterised in that the output frequency of the speed transmitter (47) is provided as the higher frequency (f7) and in that the adjusting drive (79) ist activated each time during a measuring phase of this frequency (f7).

31. Device according to one of claims 5 to 31, characterised in that the adjusting drive can also be cut in directly by a control device (116, 125, 156, 158), by means of which when at least one switching device (14 to 16) is actuated, the adjusting drive (79) is movable into position corresponding to the current actual value.

**Revendications**

1. Procédé pour la régulation numérique de la vitesse de déplacement d'un véhicule automobile, au moyen d'une valeur réelle et au moyen d'une valeur de consigne susceptible d'être d'éposées dans une mémoire, et qui est proportionelle à une vitesse de déplacement souhaitée, la valeur réelle étant susceptible d'être transférée dans la mémoire de valeur de consigne lors de l'actionnement d'au moins un dispositif de commutation, procédé comportant une comparaison entre la valeur réelle et la valeur de consigne dont le signal différentiel provoque un réajustement de la vitesse du véhicule, procédé caractérisé en ce qu'une valeur de consigne auxiliaire est prédéfinie dans un second dispositif de mémoire, lequel en partant de la valeur réelle croît selon une rampe jusqu'à la valeur de consigne, cette valeur de consigne auxiliaire étant utilisée pour la comparaison entre la valeur réelle et la valeur de consigne pendant le processus d'accélération, cependant que la rampe comporte deux pentes différentes, une pente tout d'abord plus importante en valeur absolue se transformant en une pente de plus petite valeur absolue, dès que la valeur réelle correspond à la valeur de consigne et qu'en conséquence, elle est mémorisée dans la mémoire de valeur de consigne sous la forme de valeur de consigne.

2. Procédé selon la revendication 1, caractérisé en ce que la rampe comporte deux pentes différentes en valeur absolue, une pente tout d'abord plus importante se transformant en une pente plus réduite, dès que la valeur réelle, dans le cas d'une valeur de consigne prédéfinie, a atteint une différence prédéfinie ($\Delta$V) par rapport à la valeur de consigne.

3. Procédé selon une des revendications 1 ou 2, caractérisé en ce que dans le cas d'une valeur de consigne prédéfinie, la pente de la rampe décroît constamment en fonction de la différence entre la valeur de consigne et la valeur de consigne auxiliaire.

4. Procédé selon une des revendications 1 à 3, caractérisé en ce qu'au moyen d'un dispositif de commutation (15 ou bien 16) pour le déclenchement d'un processus d'accélération, la valeur réelle du moment est essentiellement mémorisée sous la forme de valeur de cionsigne auxiliaire et que cette valeur est modifiée selon une rampe prédéfinie pour la durée de l'actionnement du dispositif de commutation (15 ou 16) tandis qu'immédiatement après la nouvelle valeur réelle est réceptionnée dans la mémoire de valeur de consigne (46).

5. Dispositif numérique de régulation pour la vitesse de déplacement d'un véhicule automobile, avec un indicateur de valeur réelle (47), avec le dispositif de mémoire (46) pour une valeur de consigne proportionnelle à la vitesse souhaitée du véhicule, la valeur réelle étant susceptible d'être transférée dans le dispositif de mémoire de valeur de consigne (46) lors de l'actionnement d'au moins un dispositif de commutation, avec des moyens pour procéder à une comparaison entre la valeur réelle et la valeur de consigne, et avec un dispositif susceptible d'être commandé par la différence de ces valeurs, et qui agit sur un élément influençant la vitesse du véhicule, dispositif caractérisé en ce qu'il est prévu un second dispositif de mémoire (41) de valeur de consigne auxiliaire, dans lequel peut être réceptionnée une valeur réelle, tandis que par un dispositif de comptage (35, 37, 39, 121) la valeur du second dispositif de mémoire (41) est susceptible d'être modifiée selon une rampe, cette valeur du second dispositif de mémoire (41) servant de valeur de consigne pour un dispositif de régulation (61) pendant le processus d'accélération, et le dispositif de comptage (35, 37, 39, 121) comportant différentes fréquences, la fréquence de comptage étant susceptible d'être commutée d'une fréquence élévée sur la fréquence basse, ainsi que le dispositif de comptage dès que la valeur réelle est réceptionnée dans le dispositif de mémoire de valeur de consigne (46) par un dispositif de commutation (15 ou bien 16).

6. Dispositif selon la revendication 5, caractérisé en ce que, pour une valeur de consigne mémorisée dans le dispositif de mémoire de valeur de consigne (46) lors de l'actionnement d'un premier dispositif de commutation (14), la valeur réelle du moment est lue dans le second dispositif de mémoire (41); une première fréquence étant appliquée au second dispositif de mémoire (41), pour modifier cette valeur et il y a commutation sur une seconde fréquence plus basse jusqu'à ce que la valeur de consigne auxiliaire corresponde à la valeur de consigne lorsque la valeur réelle diffère de la valeur de consigne mémorisée d'une valeur fixe ($\Delta$V).

7. Dispositif selon la revendication 5, caractérisé en ce que pour une valeur de consigne mémorisée dans le dispositif de mémoire de valeur de consigne (46), et lors de l'actionnement d'un premier dispositif de commutation (14), la valeur réelle est lue dans le second dispositif de mémoire (41), tandis que pour modifier cette valeur, il est appliqué au second dispositif de mémoire (41) une fréquence qui est modifiable en fonction de la différence entre la valeur de consigne mémorisée et la valeur actuelle du second dispositif de mémoire (41).

8. Dispositif selon une des revendications 6 ou 7, caractérisé en ce que lors de l'actionnement d'un autre dispositif de commutation (15 ou bien 16) pour le déclenchement d'un processus d'accélération, la valeur réelle du moment est lue dans le second dispositif de mémoire (41), la valeur mémorisée étant susceptible d'être modifiée au moyen d'un dispositif de comptage (35, 37, 39, 121) pendant la durée où l'autre dispositif de commutation (15 ou bien 16) est actionné, et immédiatement après, la valeur réelle est réceptionnée dans le dispositif de mémoire de valeur de consigne (46).

9. Dispositif selon une des revendications 5 et 8, caractérisé en ce qu'il est prévu des moyens (115) grâce auxquels il est appliqué à la valeur réelle du moment une valeur prédéfinie et la valeur réelle ainsi légèrement modifiée est susceptible d'être réceptionnée dans le second dispositif de mémoire (41).

10. Dispositif selon une des revendications 8 ou 9, caractérisé en ce qu'après actionnement de l'autre dispositif de commutation (15 ou 16) la plus petite pente de la rampe avec un signe inversé devient opérationnelle jusqu'à ce que la valeur réelle corresponde à la valeur de consigne.

11. Dispositif selon une des revendications 8 ou 9, caractérisé en ce que des moyens (112, 121) pour déterminer une pente variable de la rampe, comportent un dispositif de commande (111, entrée A = 0 de 112) grâce auquel pendant l'actionnement de l'autre dispositif de commutation (15 ou bien 16), la pente de la rampe peut être établie à une valeur maximale.

12. Dispositif selon une des revendications 8 à 11, caractérisé en ce qu'il est prévu respectivement un autre dispositif de commutation (15, 16) pour déclencher un processus d'accélération positif et un processus d'accélération négatif.

13. Dispositif selon une des revendications 8 à 11, caractérisé en ce que lors de l'actionnement de l'un des autres dispositifs de commutation (15, 16) la valeur réelle est en outre réceptionnée dans le dispositif de mémoire de valeur de consigne (46), pour, lors d'un actionnement de courte durée, prédéfinir la valeur réelle du moment comme autres valeurs de consigne de la vitesse de déplacement.

14. Dispositif selon une des revendications 5 à 13, caractérisé en ce qu'un dispositif de coupure (73, 74, 77) est prévu pour stopper la rampe, ce dispositif étant susceptible d'être déclenché lorsqu'au moins une valeur finale susceptible d'être prédéterminée (Smin ou bien Smax) est atteinte.

15. Dispositif selon une des revendications 5 à 14, caractérisé en ce qu'il est prévu des moyens (117) pour détecter la différence entre la valeur de rampe et la valeur réelle, tandis qu'il est prévu une détection de valeur de seuil (122) grâce à laquelle une autre modification de la valeur de rampe est susceptible d'être empêchée lors du dépassement d'une différence maximale admissible.

16. Dispositif selon une des revendications 5 à 15, caractérisé en ce que la valeur de consigne mémorisée dans le dispositif de mémoire de valeur de consigne (46) est susceptible d'être modifiée de façon correspondante à la courbe caractéristique de fonctionnement du moteur à combustion interne et du dispositif de régulation à l'aide d'une mémoire à valeur fixe (ROM) (64).

17. Dispositif selon une des revendications 5 à 16, caractérisé en ce que lors du franchissement vers le bas par la valeur réelle d'une valeur susceptible d'être prédéfinie, (Vmin), une coupure du dispositif de régulation est provoquée.

18. Dispositif selon une des revendications 5 à 17, caractérisé en ce que, lors du dépassement d'une valeur susceptible d'être prédéterminée par la différence entre la valeur de pointe (valeur de consigne maximale) et la valeur réelle, une coupure du dispositif de régulation est provoquée.

19. Dispositif selon la revendication 18, caractérisé en ce que la valeur susceptible d'être prédéfinie est en dépendance de la vitesse de déplacement par adressage d'une mémoire à valeur fixe (65).

20. Dispositif selon une des revendications 5 à 19, caractérisé en ce que l'intervention de processus déterminés dans le véhicule automobile, notamment des processus de freinage ou d'embrayage, provoque une coupure du dispositif de régulation.

21. Dispositif selon une des revendications 5 à 20, caractérisé en ce que, par l'actionnement d'un des dispositifs de commutation (14, 15, 16) un verrouillage d'un dispositif de réglage (78, 100) est susceptible d'être suspendu.

22. Dispositif selon une des revendications 5 à 21, caractérisé en ce qu'une mémoire de valeur réelle (52) est associée à l'indicateur de valeur réelle (50), la valeur réelle actuelle étant constamment emmagasinée dans cette mémoire.

23. Dispositif selon une des revendications 5 à 22, caractérisé en ce qu'en actionnant un des dispositifs de commutation (14, 15, 16) et/ou lors de l'intervention d'un processus provoquant la coupure du dispositif de régulation, une remise à l'état initial de tous les dispositifs de mémoires, à l'exclusion du dispositif de mémoire de valeur de consigne (46), du dispositif de mémoire de valeur réelle (52), et de préférence du dispositif de mémoire de la valeur de rampe (41) est susceptible d'être déclenchée.

24. Dispositif selon une des revendications 5 à 23, caractérisé en ce que lors de l'enclenchement de la tension d'alimentation, l'ensemble des dispositifs de mémoires sont remis à l'état initial, et il est prévu un dispositif de verrouillage (170 à 173) grâce auqel les signaux suivants ne peuvent plus ramener à l'état initial les dispositifs de mémoires (52, 46, 41).

25. Dispositif selon une des revendications 5 à 24, caractérisé en ce qu'il est prévu un dispositif de commutation (114) pour une commutation entre le dispositif de mémoire de valeur de consigne (46) et le dispositif de mémoire de valeur de rampe (41), le contenu du dispositif de mémoire de valeur de rampe (41) étant transmis comme valeur de consigne pour la régulation du dispositif de réglage (78, 100) jusqu'à ce qu'il y ait identité entre la valeur de rampe et la valeur de consigne, ou bien pendant que l'autre dispositif de commutation (15 ou bien 16) est actionné.

26. Dispositif selon une des revendications 5 à 25, caractérisé en ce qu'il est prévu des moyens (118, 129) pour la multiplication de la différence de réglage par un facteur dépendant de la valeur réelle.

27. Dispositif selon une des revendications 5 à 26, caractérisé en ce qu'il est prévu comme dispositif de réglage, un circuit de régulation (78).

28. Dispositif selon une des revendications 5 à 26, caractérisé en ce qu'il est prévu comme dispositif de réglage, une commande par impulsion (100) dans laquelle la grandeur de réglage est convertie en une tension d'impulsions avec un taux d'impulsions dépendant des valeurs de réglage.

29. Dispositif selon la revendication 28, caractérisé en ce que la commande par impulsion (100) comprend un dispositif de comptage (151) dans lequel sont réceptionnées, à la cadence d'une première fréquence (f6), les grandeurs de réglage appliquées respectivement sous forme de nombres binaires, les valeurs ainsi récptionnées étant comptées à la cadence d'une seconde fréquence plus élevée (f7), le temps de comptage définissant respectivement les largeurs d'impulsions des signaux de la tension d'impulsion.

30. Dispositif selon la revendication 29, caractérisé en ce qu'il est prévu pour la fréquence la plus élevée (f7) la fréquence de sortie de l'indicateur de vitesse de rotation (47), la commande de l'entraînement de réglage (79) s'effectuant respectivement pendant une phase de mesure de cette fréquence (f7).

31. Dispositif selon une des revendications 5 à 31, caractérisé en ce que l'entraînement de réglage est également susceptible d'être directement enclenché par un dispositif de commande (116, 125, 156, 158), grâce auquel l'entraînement de réglage (79), lors de l'actionnement d'au moins un dispositif de commutation (14 à 16), est susceptible d'être déplacé dans une position correspondant à la valeur réelle du moment.

FIG.1

# FIG.2

# FIG.3

FIG. 4

# FIG. 5

U 14

Z

Z 46
(V soll)

Z 41
(V soll')

f4

Z 52
(V ist)

ΔX

t

# FIG. 6

U 14

Z

Z 46
(V soll)

Z 41
(V soll')

f4

ΔY

Z 52
(V ist)

ΔX

t

# FIG.7

# FIG.8

# FIG.9